(19) Europäisches Patentamt
European Patent Office
Office européen des brevets

(11) **EP 3 193 466 B1**

(12) **EUROPEAN PATENT SPECIFICATION**

(45) Date of publication and mention
of the grant of the patent:
**09.01.2019 Bulletin 2019/02**

(51) Int Cl.:
*H04B 17/11* (2015.01)  *H04B 7/022* (2017.01)
*H04L 25/02* (2006.01)  *H04J 11/00* (2006.01)
*H04L 5/00* (2006.01)  *H04W 88/08* (2009.01)

(21) Application number: **16189813.5**

(22) Date of filing: **28.05.2013**

(54) **METHOD AND APPARATUS FOR JOINT CHANNEL CORRECTION AMONG MULTIPLE RADIO REMOTE UNITS**

VERFAHREN UND VORRICHTUNG ZUR GEMEINSAMEN KANALKORREKTUR ZWISCHEN MEHREREN ENTFERNTEN FUNKEINHEITEN

PROCÉDÉ ET APPAREIL DE CORRECTION DE CANAL COMMUN PARMI DE MULTIPLES UNITÉS RADIO À DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2012 CN 201210375324**
**03.12.2012 CN 201210508812**

(43) Date of publication of application:
**19.07.2017 Bulletin 2017/29**

(62) Document number(s) of the earlier application(s) in accordance with Art. 76 EPC:
**13842810.7 / 2 894 794**

(73) Proprietor: **Huawei Technologies Co., Ltd.**
**Longgang District**
**Shenzhen, Guangdong 518129 (CN)**

(72) Inventors:
• **YI, Xiongshu**
**Shenzhen, Guangdong 518129 (CN)**

• **GUAN, Lu**
**Shenzhen, Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**WO-A1-2011/074031      CN-A- 101 505 179**
**US-A1- 2012 208 584**

• **ALI EL ARAB ET AL: "A new non-coherent MIMO scheme: Matrix Coded Modulation MCM", COMMUNICATIONS AND INFORMATION TECHNOLOGIES (ISCIT), 2011 11TH INTERNATIONAL SYMPOSIUM ON, IEEE, 12 October 2011 (2011-10-12), pages 120-125, XP032027602, DOI: 10.1109/ISCIT.2011.6089714 ISBN: 978-1-4577-1294-4**

**Description**

**TECHNICAL FIELD**

The present invention relates to communication technologies and, in particular, to a method and an apparatus for joint channel correction among multiple RRUs.

**BACKGROUND**

In a time division duplex (Time Division Duplex, TDD) system, a base station performs an estimation to an uplink channel by detecting sounding reference signals (Sounding Reference Signal, SRS) transmitted by a user equipment (User Equipment, UE), and takes the estimated uplink channel as a downlink channel to perform a beamforming by utilizing reciprocity between the uplink and the downlink channel of the TDD system. Although in the TDD system, the uplink and the downlink channel are reciprocal in theory, in an actual system, different intermediate radio frequency transmitting and receiving channel responses of the base station is introduced into an uplink and a downlink channel response respectively. With theoretical analysis, it is found that if ratios of transmitting channel responses to receiving channel responses of any two intermediate radio frequency channels are different, then effects of coherent transmission will be affected. Thus, compensation needs to be performed to each intermediate radio frequency transmitting and receiving channel, which is called as channel correction. Some mature methods for channel correction of a single cell have been presented.

US 2012/0208584 A1 shows a radio base station and a method for antenna calibration. The radio base station comprises at least one BBU and a number of distributed RRUs. The BBU is connected with each RRU via a cable forming a BBU and RRU pair, which utilizes an antenna calibration chain for antenna calibration. The method comprises for each BBU and RRU pair a step of obtaining a cable delay based on a length of the cable. Based on the cable delay a delay compensation is calculated. The method also comprises a step of adapting the antenna calibration chain based on the calculated delay compensation.

US 2012/0252366 A1 shows a wireless signal processor configured to cooperate with a first wireless apparatus and a second wireless apparatus. A first and second calibration coefficient are calculated for the transmission and reception system of each apparatus, respectively. Then, for each apparatus, a transfer function of a path from the one wireless apparatus to the other wireless apparatus is estimated using a signal obtained by receiving, at a respective reception weight by the other wireless apparatus, a respective calibration signal transmitted from the one wireless apparatus using a respective transmission weight. This step is iterated several times between the two apparatus. Afterwards, a third calibration coefficient for using the first transfer function and the second transfer function is calculated.

Coordinated multi-point transmission (Coordinated Multi-Point, CoMP) is a key feature of a long term evolution (Long Term Evolution, LTE) system, and utilization of CoMP technologies can fight against interference problems of a LTE cell edge effectively. A base station side in the LTE system may include a base band unit (Base Band Unit, BBU), and each BBU may connect multiple radio remote units (Radio Remote Unit, RRU). As one kind of CoMP technologies, joint transmission (Joint Transmission, JT) techniques can improve the cell edge and average throughput significantly. In the TDD system, in order to achieve gains brought by the JT techniques, channel correction also needs to be performed. Different from single cell beamforming techniques, the JT techniques require that ratios of uplink and downlink radio frequency channel responses corresponding to each antenna of a plurality of cells are the same. Even if channel correction is performed to each cell respectively, if an inter-cell correction is not performed, the JT techniques still cannot reach the desired performance. In a case where a corresponding cell is covered by a single RRU, channel correction techniques for the single RRU have been relatively mature, but for joint channel correction among multiple RRUs, it remains a problem in the industry.

**SUMMARY**

The present invention provides a method and an apparatus for joint channel correction among multiple RRUs, which are used for joint channel correction among multiple RRUs in a communication system.

In a first aspect, a method for joint channel correction among multiple RRUs is provided, which is used for joint channel correction among multiple RRUs in a communication system, the communication system at least includes a first RRU and a second RRU, where the method includes: performing a self-correction to the first RRU and the second RRU respectively, and acquiring a first self-correction coefficient and a second self-correction coefficient respectively; transmitting a first correction signal to a second antenna of the second RRU through a first antenna of the first RRU, and receiving, by the second antenna, the first correction signal, acquiring a second compensation coefficient; transmitting a second correction signal to the first antenna through the second antenna, and receiving, by the first antenna, the second correction signal, acquiring a first compensation coefficient; acquiring a first correction coefficient according to the first compensation coefficient and the first self-correction coefficient, acquiring a second correction coefficient according to the second compensation coefficient and the second self-correction coefficient;

wherein the first self-correction coefficient comprises a first transmitting self-correction coefficient and a first receiving self-correction coefficient of each service channel of the first RRU, the first correction coefficient comprises a first transmitting correction coefficient and a first receiving correction coefficient of each service channel of the first RRU;

wherein the first correction signal is product of a correction reference sequence and the first transmitting self-correction coefficient of a service channel corresponding to the first antenna, the second correction signal is product of the correction reference sequence and a second transmitting self-correction coefficient of a service channel corresponding to the second antenna.

In a first possible implementation, with reference to the first aspect, the first self-correction coefficient includes a first transmitting self-correction coefficient and a first receiving self-correction coefficient, the second self-correction coefficient includes a second transmitting self-correction coefficient and a second receiving self-correction coefficient; the first correction coefficient includes a first transmitting correction coefficient and a first receiving correction coefficient, the second correction coefficient includes a second transmitting correction coefficient and a second receiving correction coefficient.

In a second possible implementation, with reference to the first aspect, the first antenna and the second antenna are any antenna of the first RRU and the second RRU respectively; or the first antenna and the second antenna are an antenna reaching a threshold of received signal strength or signal quality of the first RRU and the second RRU respectively; or performing an antenna radiation direction adjustment to antennas of the first RRU and the second RRU, selecting a pair of antennas reaching a threshold of received signal strength or signal quality; a way of performing the antenna radiation direction adjustment includes any one or any combination of following ways: digital weighting, intermediate frequency weighting, radio frequency phase shift and physical movement.

In a third possible implementation, with reference to the first possible implementation of the first aspect, the first correction signal is a correction reference sequence, before the acquiring the second compensation coefficient, further including a following step: transmitting the first transmitting self-correction coefficient to the second RRU; before the acquiring the first compensation coefficient, further including a following step: transmitting the second transmitting self-correction coefficient to the first RRU.

In a fourth possible implementation, with reference to the second and the third possible implementations of the first aspect, the correction reference sequence includes a training sequence or a reference signal sequence used in a long term evolution (LTE) system and a worldwide interoperability for microwave access (WiMAX) system.

In a fifth possible implementation, with reference to the second and the sixth possible implementations of the first aspect, the acquiring the first correction coefficient according to the first compensation coefficient and the first self-correction coefficient is specifically: multiplying the first compensation coefficient and the first transmitting self-correction coefficient and taking product as the first transmitting correction coefficient; or taking a ratio of the first receiving self-correction coefficient to the first compensation coefficient as the first receiving correction coefficient; or taking a ratio of the first transceiving joint self-correction coefficient to the first compensation coefficient as a first transceiving joint correction coefficient; the acquiring the second correction coefficient according to the second compensation coefficient and the second self-correction coefficient is specifically: multiplying the second compensation coefficient and the second transmitting self-correction coefficient and taking product as the second transmitting correction coefficient; or taking a ratio of the second receiving self-correction coefficient to the first compensation coefficient as the second receiving correction coefficient; or taking a ratio of the second transceiving joint self-correction coefficient to the first compensation coefficient as a second transceiving joint correction coefficient.

In an sixth possible implementation, with reference to the first and the fourth possible implementations of the first aspect, the acquiring the second compensation coefficient is specifically: receiving, by the second antenna, the first correction signal, acquiring a second channel response, and taking the second channel response and a receiving self-correction coefficient of a service channel corresponding to the second antenna as the second compensation coefficient; the acquiring the first compensation coefficient is specifically: receiving, by the first antenna, the second correction signal, acquiring a first channel response, and taking the first channel response and a receiving self-correction coefficient of a service channel corresponding to the first antenna as the first compensation coefficient.

In a seventh possible implementation, with reference to the first and the fourth possible implementations of the first aspect, the communication system further includes a third RRU, before or after the performing the self-correction to the first RRU and the second RRU respectively, and the acquiring the first self-correction coefficient and the second self-correction coefficient respectively, further including following steps: performing a self-correction to the third RRU, and acquiring a third self-correction coefficient; the third self-correction coefficient includes a third transmitting self-correction coefficient and a third receiving self-correction coefficient; after the acquiring the first compensation coefficient, further including following steps: transmitting the first compensation coefficient to the third RRU, and acquiring a third correction coefficient according to the first compensation coefficient and the third self-correction coefficient.

In a second aspect, the present invention provides a correction apparatus, which is used for joint channel correction among multiple RRUs in a communication system, the communication system at least includes a first RRU and a second RRU, where the correction apparatus includes: a self-corrector, configured to perform a self-correction to the first RRU and the second RRU respectively, and acquire a first self-correction coefficient and a second self-correction coefficient respectively; a first controller, configured to transmit a first correction signal to a second antenna of the second RRU through a first antenna of the first RRU, and receive the first correction signal through the second antenna; a second controller, configured to transmit a second correction signal to the first antenna through the second antenna, receive the second correction signal the first antenna, and acquires a first compensation coefficient; a processor, configured to acquire a second compensation coefficient after the second antenna receives the first correction signal; acquire a first compensation coefficient after the first antenna receives the second correction signal; and acquire a first correction coefficient according to the first compensation coefficient and the first self-correction coefficient, acquire a second correction coefficient according to the second compensation coefficient and the second self-correction coefficient; wherein, the first self-correction coefficient comprises a first transmitting self-correction coefficient and a first receiving self-correction coefficient of each service channel of the first RRU, the first correction coefficient comprises a first transmitting correction coefficient and a first receiving correction coefficient of each service channel of the first RRU; wherein the first correction signal is product of a correction reference sequence and the first transmitting self-correction coefficient of a service channel corresponding to the first antenna, the second correction signal is product of the correction reference sequence and a second transmitting self-correction coefficient of a service channel corresponding to the second antenna.

In a first possible implementation, with reference to the second aspect, the correction apparatus further includes a compensator, the compensator is configured to perform channel compensation to the first RRU according to the first correction coefficient, and perform channel compensation to the second RRU according to the second correction coefficient.

In a second possible implementation, with reference to the second aspect, the first antenna and the second antenna are any antenna of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas reaching a threshold of received signal strength or signal quality; a way of performing the antenna radiation direction adjustment includes any one or any combination of following ways: digital weighting, intermediate frequency weighting, radio frequency phase shift and physical movement.

In a third possible implementation, with reference to the second aspect, the correction apparatus further includes a first transmitter, the first transmitter is configured to transmit the first transmitting self-correction coefficient to the second RRU before acquiring the second compensation coefficient; and transmit the second transmitting self-correction coefficient to the first RRU before acquiring the first compensation coefficient.

In a fourth possible implementation, with reference to the second aspect, the self-corrector is further configured to perform a self-correction to the third RRU included in the communication system, and acquire a third self-correction coefficient; the correction apparatus further includes a second transmitter, the second transmitter is configured to transmit the first compensation coefficient to the third RRU after acquiring the first compensation coefficient; the processor is further configured to acquire a third correction coefficient according to the first compensation coefficient and the third self-correction coefficient.

According to the present invention, a first self-correction coefficient and a second self-correction coefficient are acquired by performing a self-correction to a first RRU and a second RRU respectively, then a first compensation coefficient and a second compensation coefficient are acquired through transmitting and receiving correction signals to or from each other via any antenna of the first RRU and any antenna of the second RRU, a first correction coefficient and a second correction coefficient are acquired according to the first self-correction coefficient, the first compensation coefficient, the second self-correction coefficient and the second compensation coefficient, and channel compensation is performed to the first RRU and the second RRU respectively, thus the joint channel correction among multiple RRUs are realized.

## BRIEF DESCRIPTION OF DRAWINGS

In order to make technical solutions in embodiments of the present invention or the prior art more clearly, accompanying drawings used in the description of embodiments of the present invention or the prior art will be briefly described hereunder. Obviously, the described drawings are merely some embodiments of present invention. For persons skilled in the art, other drawings may be obtained based on these drawings without any inventive effort.

FIG. 1 is a schematic diagram of external correction of joint channel correction between 2 RRUs according to an embodiment of the present invention;
FIG. 2 is a schematic diagram of internal correction of joint channel correction between 2 RRUs according to an embodiment of the present invention;

FIG. 3 is a schematic flow chart of joint channel correction between 2 RRUs according to an embodiment of the present invention;

FIG. 4 is a schematic diagram of a selection for an antenna for transmitting and receiving a correction signal during joint channel correction between 2 RRUs according to an embodiment of the present invention;

FIG. 5 is a schematic flow chart of joint channel correction between 2 RRUs according to another embodiment of the present invention;

FIG. 6 is a schematic diagram of joint channel correction among 3 RRUs according to an embodiment of the present invention;

FIG. 7 is a schematic flow chart of joint channel correction among 3 RRUs according to an embodiment of the present invention;

FIG. 8 is a schematic diagram of joint channel correction among k RRUs according to an embodiment of the present invention;

FIG. 9 is a schematic flow chart of joint channel correction among k RRUs according to an embodiment of the present invention;

FIG. 10 is a schematic flow chart of joint channel correction among 3 RRUs according to another embodiment of the present invention;

FIG. 11 is a schematic structural diagram of a correction apparatus according to an embodiment of the present invention;

FIG. 12 is a schematic flow chart of joint channel correction between 2 RRUs according to another embodiment of the present invention;

FIG. 13 is a schematic structural diagram of a correction apparatus according to another embodiment of the present invention.

## DESCRIPTION OF EMBODIMENTS

Technical solutions in embodiments of the present invention are hereinafter described clearly and completely with reference to accompanying drawings in embodiments of the present invention. Obviously, the described embodiments are only a part of embodiments of the present invention, rather than all embodiments of the present invention. All other embodiments obtained by persons of ordinary skill in the art based on embodiments of the present invention without any inventive efforts shall fall within the protection scope of the present invention.

In this embodiment, an RRU includes a plurality of intermediate radio frequency channels, also known as service channels, the service channels correspond to antennas one by one, each service channel includes an intermediate radio frequency receiving channel and an intermediate radio frequency transmitting channel, defined as a service receiving channel and a service transmitting channel respectively, besides the service channels, the RRU also includes at least one correction channel to perform a channel correction, where the correction channel includes an intermediate radio frequency receiving channel and an intermediate radio frequency transmitting channel, defined as a correction receiving channel and a correction transmitting channel respectively. In practical applications, the correction channel and the service channel may share one or a part of intermediate radio frequency channel, and may use a corresponding service antenna to transmit a correction signal. A coupling circuit and an antenna in a system may be integrated together, for example, the coupling circuit may be a coupling module integrated in the antenna, and meanwhile the coupling circuit may also be integrated inside the RRU.

Embodiment 1:

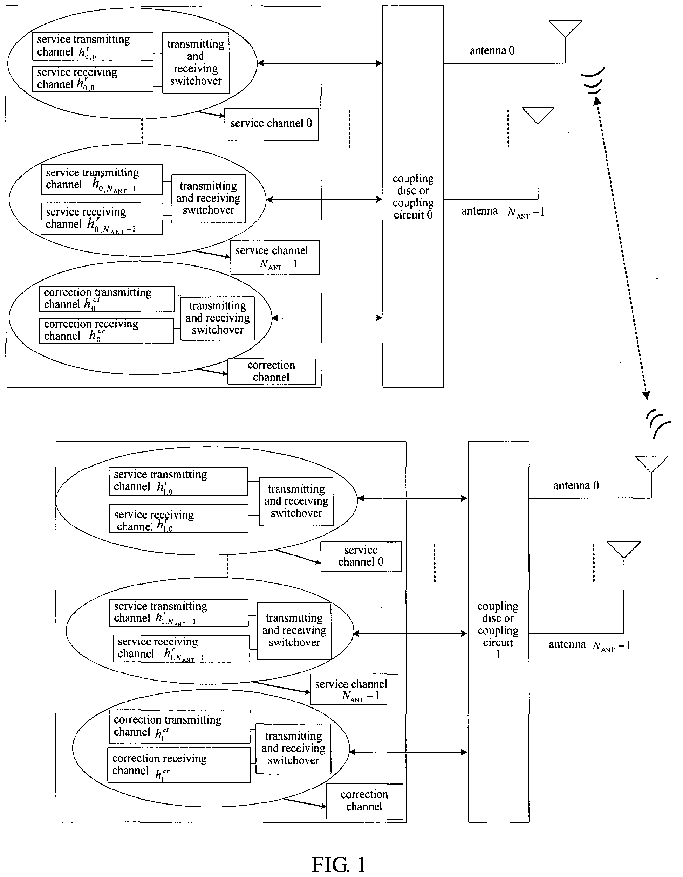

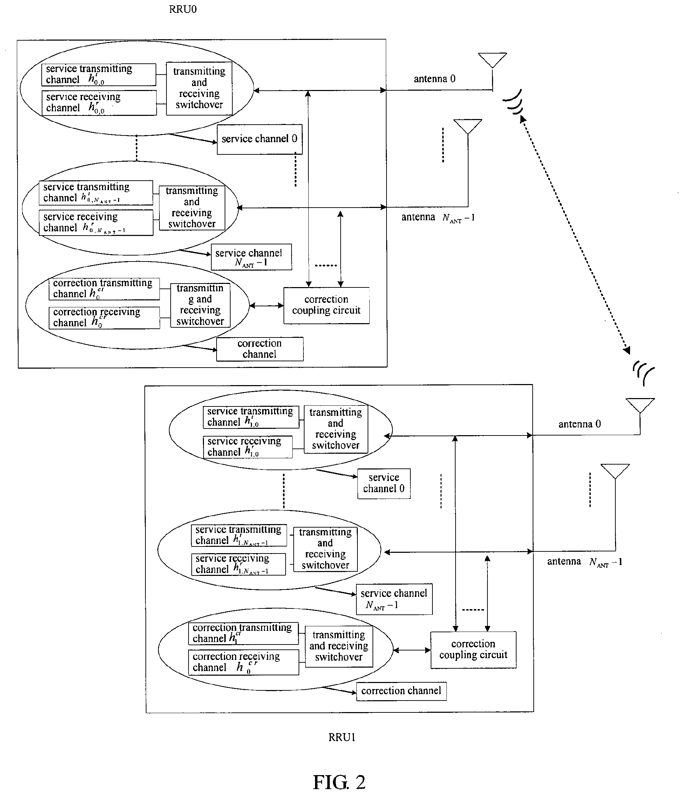

Embodiment 1 is described by taking an example of channel correction between two RRUs where each RRU includes 4 antennas (the actual number of antennas can be any integer), i is used to represent antennas of the RRUs in the embodiment, $i$=0, 1, 2, 3, as shown in FIG. 1 and FIG. 2, FIG. 1 is an external correction type, FIG. 2 is an internal correction type, both of them can be applicable to this embodiment. The external correction indicates that a coupling circuit is not integrated inside an RRU; and the internal correction indicates that a coupling circuit is integrated inside an RRU. TRX in FIG. 1 and FIG. 2 indicates a service transceiving channel.

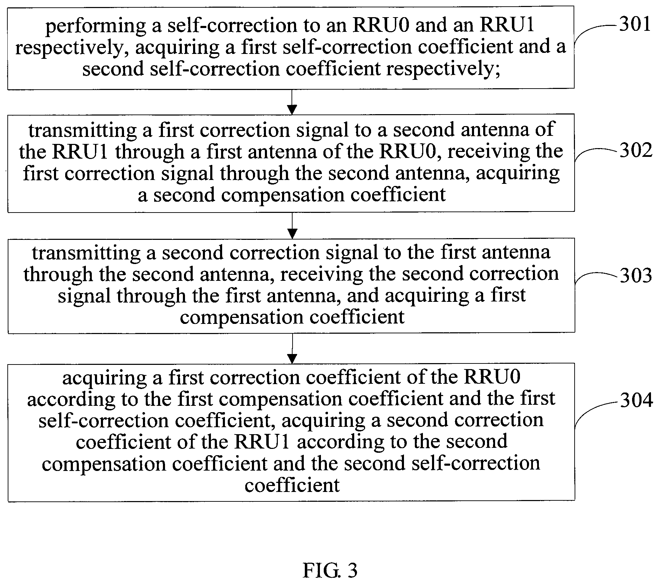

FIG. 3 is a schematic flow chart of a method for joint channel correction among multiple RRUs provided by Embodiment 1, as shown in FIG. 3, the method includes:

S301: performing a self-correction to an RRU0 and an RRU1 respectively;

In this embodiment, the RRU0 and the RRU1 are a first RRU and a second RRU respectively. The method of performing self-correction inside a single RRU is the prior art, and will not be repeated in this embodiment. After completing the self-correction, the RRU0 and the RRU1 acquire their self-correction coefficient respectively, where the self-correction coefficient includes a service transmitting channel self-correction coefficient (briefly as a transmitting self-correction coefficient) and a service receiving channel self-correction coefficient (briefly as a receiving self-correction coefficient). The TDD system's requirement for uplink-downlink reciprocity of a single RRU can be satisfied by using the receiving self-correction coefficient and the transmitting self-correction coefficient to compensate uplink reception and downlink transmission respectively.

The receiving self-correction coefficient $\beta_{k,i}^{\mathrm{UL}}(n)$ may be expressed as:

$$\beta_{k,i}^{\mathrm{UL}}(n) = \frac{1}{h_k^{ct}(n) h_{k,i}^{r}(n)}, k = 0,1$$

When k=0, the receiving self-correction coefficient is:

$$\beta_{0,i}^{\mathrm{UL}}(n) = \frac{1}{h_0^{ct}(n) h_{0,i}^{r}(n)}$$

When k=1, the receiving self-correction coefficient is:

$$\beta_{1,i}^{\mathrm{UL}}(n) = \frac{1}{h_1^{ct}(n) h_{1,i}^{r}(n)}$$

Where, k indicates the kth RRU, in this embodiment, k being 0 indicates the RRU0, k being 1 indicates the RRU1; n indicates the nth subcarrier, n=0, 1, ⋯, N-1, N indicates the number of subcarriers; i indicates the ith service receiving channel, $h_k^{ct}(n)$ indicates a channel response of a correction transmitting channel of the kth RRU over the nth subcarrier; $h_{k,i}^{r}(n)$ indicates a channel response of the ith service receiving channel of the kth RRU over the nth subcarrier.

The transmitting self-correction coefficient may be expressed as:

$$\beta_{k,i}^{\mathrm{DL}}(n) = \frac{1}{h_k^{cr}(n) h_{k,i}^{t}(n)}, k = 0,1$$

When k=0, the transmitting self-correction coefficient is:

$$\beta_{0,i}^{\mathrm{DL}}(n) = \frac{1}{h_0^{cr}(n) h_{0,i}^{t}(n)}$$

When k=1, the transmitting self-correction coefficient is:

$$\beta_{1,i}^{\mathrm{DL}}(n) = \frac{1}{h_1^{cr}(n) h_{1,i}^{t}(n)}$$

Where, k indicates the kth RRU, in this embodiment, k being 0 indicates the RRUO, k being 1 indicates the RRU1; n indicates the nth subcarrier, n=0, 1, ⋯, N-1, ; i indicates the ith transmitting channel, $h_k^{cr}(n)$ indicates a channel response of a correction receiving channel of the kth RRU over the nth subcarrier; $h_{k,i}^{t}(n)$ indicates a channel response of the ith service transmitting channel of the kth RRU over the nth subcarrier.

After the RRU0 completes the self-correction, it may be expressed by the following formula:

$$\frac{\beta_{0,0}^{\mathrm{UL}}(n) h_{0,0}^{r}(n)}{\beta_{0,0}^{\mathrm{DL}}(n) h_{0,0}^{t}(n)} = \frac{\beta_{0,1}^{\mathrm{UL}}(n) h_{0,1}^{r}(n)}{\beta_{0,1}^{\mathrm{DL}}(n) h_{0,1}^{t}(n)} = \cdots = \frac{\beta_{0,N_{\mathrm{ANT}}-1}^{\mathrm{UL}}(n) h_{0,N_{\mathrm{ANT}}-1}^{r}(n)}{\beta_{0,N_{\mathrm{ANT}}-1}^{\mathrm{DL}}(n) h_{0,N_{\mathrm{ANT}}-1}^{t}(n)} = \frac{h_0^{cr}(n)}{h_0^{ct}(n)}$$

After the RRU1 completes the self-correction, it may be expressed by the following formula:

$$\frac{\beta_{1,0}^{\text{UL}}\left(n\right)h_{1,0}^{r}\left(n\right)}{\beta_{1,0}^{\text{DL}}\left(n\right)h_{1,0}^{t}\left(n\right)} = \frac{\beta_{1,1}^{\text{UL}}\left(n\right)h_{1,1}^{r}\left(n\right)}{\beta_{1,1}^{\text{DL}}\left(n\right)h_{1,1}^{t}\left(n\right)} = \cdots = \frac{\beta_{1,N_{\text{ANT}}-1}^{\text{UL}}\left(n\right)h_{1,N_{\text{ANT}}-1}^{r}\left(n\right)}{\beta_{1,N_{\text{ANT}}-1}^{\text{DL}}\left(n\right)h_{1,N_{\text{ANT}}-1}^{t}\left(n\right)} = \frac{h_{1}^{cr}\left(n\right)}{h_{1}^{ct}\left(n\right)}$$

In the formulas where the RRU0 and the RRU1 complete their self-correction, $N_{\text{ANT}}$ indicates the number of antennas of an RRU. In addition, the formulas are described by taken the RRU0 and the RRU1 having the same number of antennas as an example, such method is also applicable to an RRU with any number of antennas.

Alternatively, a transceiving joint self-correction coefficient is expressed as a ratio of the receiving self-correction coefficient to the transmitting self-correction coefficient:

$$\tilde{\beta}_{k,i}\left(n\right) = \frac{\beta_{k,i}^{\text{UL}}\left(n\right)}{\beta_{k,i}^{\text{DL}}\left(n\right)}$$

After the RRU0 completes the self-correction by using the transceiving joint self-correction coefficient, it may be expressed by the following formula:

$$\frac{\tilde{\beta}_{0,0}\left(n\right)h_{0,0}^{r}\left(n\right)}{h_{0,0}^{t}\left(n\right)} = \frac{\tilde{\beta}_{0,1}\left(n\right)h_{0,1}^{r}\left(n\right)}{h_{0,1}^{t}\left(n\right)} = \cdots = \frac{\tilde{\beta}_{0,N_{\text{ANT}}-1}\left(n\right)h_{0,N_{\text{ANT}}-1}^{r}\left(n\right)}{h_{0,N_{\text{ANT}}-1}^{t}\left(n\right)} = \frac{h_{0}^{cr}\left(n\right)}{h_{0}^{ct}\left(n\right)}$$

After the RRU1 completes the self-correction by using the transceiving joint self-correction coefficient, it may be expressed by the following formula:

$$\frac{\tilde{\beta}_{1,0}\left(n\right)h_{1,0}^{r}\left(n\right)}{h_{1,0}^{t}\left(n\right)} = \frac{\tilde{\beta}_{1,1}\left(n\right)h_{1,1}^{r}\left(n\right)}{h_{1,1}^{t}\left(n\right)} = \cdots = \frac{\tilde{\beta}_{1,N_{\text{ANT}}-1}\left(n\right)h_{1,N_{\text{ANT}}-1}^{r}\left(n\right)}{h_{1,N_{\text{ANT}}-1}^{t}\left(n\right)} = \frac{h_{1}^{cr}\left(n\right)}{h_{1}^{ct}\left(n\right)}$$

It can be seen that, after the RRU0 and the RRU1 completes the self-correction respectively, the first transmitting self-correction coefficient and the first receiving self-correction coefficient make uplink-downlink ratios of each channel inside the RRU0 the same, and the second transmitting self-correction coefficient and the second receiving self-correction coefficient make uplink-downlink ratios of each channel inside the RRU0 the same. However, uplink-downlink ratios in RRU0 and RRU1 are different.

S302: transmitting a first correction signal through a first antenna of the RRU0, and receiving the first correction signal through a second antenna of the RRU1; transmitting a second correction signal through the second antenna of the RRU1, and receiving the second correction signal through the first antenna of the RRU0;

Selecting any antenna of the RRU0 and the RRU1 respectively, as described above, each service channel of an RRU corresponds to an antenna, thus, in this embodiment, selecting any antenna and selecting any service channel have a same meaning. Selecting any antenna of the RRU0 and the RRU1 respectively, for example, the RRU0 selects an antenna 0 corresponding to the 0th service channel TRX0 of the RRUO, the RRU1 also selects an antenna 0 corresponding to the 0th service channel TRX0 of the RRU1, in this embodiment, the antenna 0 of the RRUO is the first antenna, and the antenna 0 of the RRU1 is the second antenna.

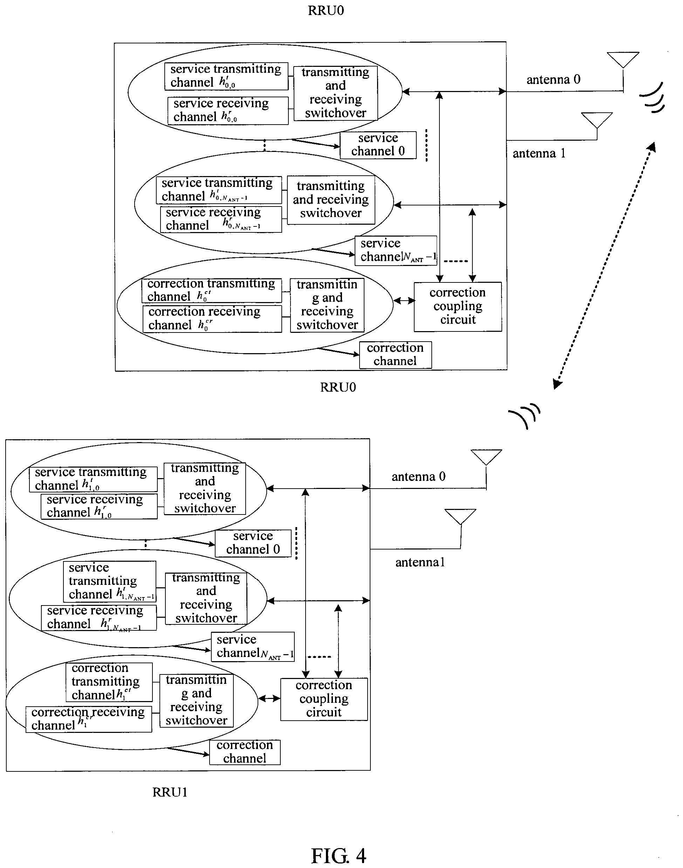

Alternatively, when selecting the antenna, an antenna with the best received signal strength or signal quality may be selected of an RRU, meanwhile an antenna radiation direction adjustment may also be performed based on at least one of digital weighting, intermediate frequency weighting, radio frequency phase shift or physical movement, achieving the received signal strength or signal quality that meets requirements during communications between RRUs. Information such as indication of the received signal strength or signal quality may be interacted via X2 interfaces or private communication interfaces. For example, in FIG. 4:

the antenna 0 of the RRU0 performs a transmission, the antenna 0 of the RRU1 performs a reception, and the signal strength or the signal quality is indicated as x00;
the antenna 1 of the RRU0 performs a transmission, the antenna 0 of the RRU1 performs a reception, and the signal strength or the signal quality is indicated as x01;

the antenna 0 of the RRU0 performs a transmission, the antenna 1 of the RRU1 performs a reception, and the signal strength or the signal quality is indicated as x10;

the antenna 1 of the RRU0 performs a transmission, the antenna 1 of the RRU1 performs a reception, and the signal strength or the signal quality is indicated as x11;

a transmitting antenna of the RRU0 may be implicitly indicated via information such as frame number or different transmitting signals, a baseband corresponding to the RRU1 completes a selection of an optimal antenna pair according to x00, x01, x10, x11, the optimal antenna pair is used for transmitting and receiving a signal between RRUs during joint channel correction between RRUs, after the antenna is selected, for example, each RRU selects the antenna 0:

1) the RRU0 is enabled to transmit a first correction signal via antenna 0, and the RRU1 is enabled to receive the first correction signal via antenna 0, where the first correction signal is: selecting a specific correction reference sequence, such as various training sequences or reference signal sequences used in an LTE or worldwide interoperability for microwave access (Worldwide Interoperability for Microwave Access, WiMAX) system, marked as reference sequence S, multiplying the correction reference sequence and the first transmitting self-correction coefficient and taking product as the first correction signal.

Alternatively, when the RRU0 transmits the first correction signal via the antenna 0, other transmitting channels except the transmitting channel of the service channel 0 corresponding to the antenna 0 of the RRU0 are turned off, so as to avoid interferences.

The first correction signal transmitted by the $n^{th}$ subcarrier of the antenna 0 of the RRU0 is:

$$\beta_{0,0}^{\text{DL}}(n)s(n), \ n=0,1,\cdots,\text{N-1}$$

The first correction signal received by the $n^{th}$ subcarrier of the antenna 0 of the RRU1 is:

$$\tilde{r}_{1,0}(n) = h_{1,0}^{r}(n) \cdot h_{Air}(n) \cdot h_{0,0}^{t}(n) \cdot \beta_{0,0}^{\text{DL}}(n) \cdot s(n), \ n=0,1,\ldots,\text{N-1}$$

$h_{Air}(n)$ is an air-interface channel response, as for the TDD system, uplink and downlink air-interface channel responses are the same, thus downlink (Downlink, DL) or uplink (Uplink, UL) is not identified.

The RRU1, after receiving the first correction signal, performs a channel estimation according to the reference sequence S, according to $\beta_{k,i}^{\text{DL}}(n) = \dfrac{1}{h_{k}^{cr}(n)h_{k,i}^{t}(n)}$ in step S301, then a second channel response estimated by the $n^{th}$ subcarrier is:

$$\gamma_{1,0}(n) = \frac{h_{1,0}^{r}(n) \cdot h_{Air}(n)}{h_{0}^{cr}(n)}, \ n=0,1,\ldots,\text{N-1}$$

Alternatively, the RRU1, after receiving the correction signal, does not perform a channel estimation, then a second channel response of the $n^{th}$ subcarrier is:

$$\gamma_{1,0}(n) = \tilde{r}_{1,0}(n) = \frac{h_{1,0}^{r}(n) \cdot h_{Air}(n)}{h_{0}^{cr}(n)} \cdot s(n), \ n=0,1,\ldots,\text{N-1}$$

2) the RRU1 is enabled to transmit a second correction signal via antenna 0, and the RRU0 is enabled to receive the second correction signal via antenna 0, where the second correction signal is: multiplying the correction reference sequence such as the reference sequence S and the second transmitting self-correction coefficient and taking product as the second correction signal.

Alternatively, when the RRU1 transmits the second correction signal via antenna 0, other transmitting channels except the transmitting channel of the service channel 0 corresponding to the antenna 0 of the RRU1 are turned off, so as to avoid interferences.

The second correction signal transmitted by the $n^{th}$ subcarrier of the antenna 0 of the RRU1 is:

$$\beta_{1,0}^{DL}(n)s(n), \text{ n=0,1,\ldots,N-1}$$

The second correction signal received by the $n^{th}$ subcarrier of the antenna 0 of the RRU0 is:

$$\tilde{r}_{0,0}(n) = h_{0,0}^{r}(n) \cdot h_{Air}(n) \cdot h_{1,0}^{t}(n) \cdot \beta_{1,0}^{DL}(n) \cdot s(n), \text{ n=0,1,\ldots,N-1}$$

The RRU0, after receiving the correction signal, performs a channel estimation according to the reference sequence S, then a first channel response estimated by the $n^{th}$ subcarrier is:

$$\gamma_{0,0}(n) = \frac{h_{0,0}^{r}(n) \cdot h_{Air}(n)}{h_{1}^{cr}(n)}, \text{ n=0,1,\ldots,N-1}$$

Alternatively, the RRU0, after receiving the correction signal, does not perform a channel estimation, then a first channel response of the $n^{th}$ subcarrier is:

$$\gamma_{0,0}(n) = \tilde{r}_{0,0}(n) = \frac{h_{0,0}^{r}(n) \cdot h_{Air}(n)}{h_{1}^{cr}(n)} \cdot s(n), \text{ n=0,1,\ldots,N-1}$$

S303: acquiring a first compensation coefficient and a second compensation coefficient according to the first channel response and the second channel response. The compensation coefficients are used to acquire correction coefficients after correcting the self-correction coefficients, so that uplink-downlink ratios of different RRUs are the same;

In this embodiment, the RRU1 selects antenna 0 corresponding to the service channel 0 as the second antenna,

$$\beta_{1,0}^{UL}(n) = \frac{1}{h_{1,0}^{r}(n) h_{1}^{ct}(n)},$$

thus, according to the receiving self-correction coefficient $\phantom{x}$ n=0,1....,N-1, of the service channel 0 acquired when the RRU1 performs the self-correction in step 301, multiply $\gamma_{1,0}(n)$ and $\beta_{1,0}^{UL}(n)$ and take product as the second compensation coefficient $\mu_1(n)$:

$$\mu_1(n) = \frac{h_{Air}(n)}{h_0^{cr}(n) h_1^{ct}(n)}, \quad \text{n=0,1,\ldots,N-1}$$

Alternatively, when the RRU1 does not perform a channel estimation after receiving the correction signal:

$$\mu_1(n) = \frac{h_{Air}(n)}{h_0^{cr}(n) h_1^{ct}(n)} \cdot s(n), \quad \text{n=0,1,\ldots,N-1}$$

In this embodiment, the RRU0 selects antenna 0 corresponding to the service channel 0 as the first antenna,

$$\beta_{0,0}^{\mathrm{UL}}(n) = \frac{1}{h_{0,0}^{r}(n)h_{0}^{ct}(n)},$$

thus, according to the receiving correction coefficient, $n=0,1....,N-1$, of the service channel 0 acquired when the RRU0 performs the self-correction in step 301, multiply $\gamma_{0,0}(n)$ and $\beta_{0,0}^{\mathrm{UL}}(n)$ and take product as the first compensation coefficient $\mu_0(n)$:

$$\mu_0(n) = \gamma_{0,0}(n)\beta_{0,0}^{\mathrm{UL}}(n) = \frac{h_{Air}(n)}{h_{1}^{cr}(n)h_{0}^{ct}(n)}, \quad n=0,1,\ldots,N-1$$

Alternatively, when the RRU0 does not perform a channel estimation after receiving the correction signal:

$$\mu_0(n) = \frac{h_{Air}(n)}{h_{1}^{cr}(n)h_{0}^{ct}(n)} \cdot s(n), \quad n=0,1,\ldots,N-1$$

It should be noted that, in this embodiment, it may be a case that transmission and reception of correction signals are completed among RRUs firstly, and then compensation coefficients are calculated, it may also be a case that an RRU0 transmits a first correction signal to an RRU1 firstly, the RRU1 calculates a second compensation coefficient after receiving the first correction coefficient, and then the RRU1 transmits a second correction signal to the RRU0, and the RRU0 calculates a first compensation coefficient after receiving the second correction signal.

S304: acquiring a first correction coefficient according to the first compensation coefficient and the first self-correction coefficient, acquiring a second correction coefficient according to the second compensation coefficient and the second self-correction coefficient, and performing channel compensation to the RRU0 and the RRU1 respectively.

Specifically, multiply the first compensation coefficient $\mu_0(n)$ and the first transmitting self-correction coefficient and take product as the first transmitting correction coefficient $\tilde{\beta}_{0,i}^{\mathrm{DL}}(n)$; multiply the second compensation coefficient $\mu_1(n)$ and the second transmitting self-correction coefficient and take product as the second transmitting correction coefficient $\tilde{\beta}_{1,i}^{\mathrm{DL}}(n)$, that is:

$$\tilde{\beta}_{0,i}^{\mathrm{DL}}(n) = \mu_0(n)\beta_{0,i}^{\mathrm{DL}}(n)$$

$$\tilde{\beta}_{1,i}^{\mathrm{DL}}(n) = \mu_1(n)\beta_{1,i}^{\mathrm{DL}}(n)$$

Perform a transmitting channel compensation to the RRU0 according to the first transmitting correction coefficient, a ratio of a receiving channel to a transmitting channel of the compensated RRU0 is:

$$\frac{\beta_{0,0}^{\mathrm{UL}}(n)h_{0,0}^{r}(n)}{\tilde{\beta}_{0,0}^{\mathrm{DL}}(n)h_{0,0}^{t}(n)} = \frac{\beta_{0,1}^{\mathrm{UL}}(n)h_{0,1}^{r}(n)}{\tilde{\beta}_{0,1}^{\mathrm{DL}}(n)h_{0,1}^{t}(n)} = \cdots = \frac{\beta_{0,N_{\mathrm{ANT}}-1}^{\mathrm{UL}}(n)h_{0,N_{\mathrm{ANT}}-1}^{r}(n)}{\tilde{\beta}_{0,N_{\mathrm{ANT}}-1}^{\mathrm{DL}}(n)h_{0,N_{\mathrm{ANT}}-1}^{t}(n)}$$

$$= \frac{\frac{1}{h_{0}^{ct}(n)}}{\frac{h_{Air}(n)}{h_{1}^{cr}(n)h_{0}^{ct}(n)}\frac{1}{h_{0}^{cr}(n)}} = \frac{h_{0}^{cr}(n)h_{1}^{cr}(n)}{h_{Air}(n)}$$

When the RRU0 does not perform a channel estimation after receiving the correction signal in S302, a ratio of a receiving channel to a transmitting channel of the compensated RRU0 is:

$$\frac{\beta_{0,0}^{\mathrm{UL}}(n)h_{0,0}^{r}(n)}{\tilde{\beta}_{0,0}^{\mathrm{DL}}(n)h_{0,0}^{t}(n)} = \frac{\beta_{0,1}^{\mathrm{UL}}(n)h_{0,1}^{r}(n)}{\tilde{\beta}_{0,1}^{\mathrm{DL}}(n)h_{0,1}^{t}(n)} = \cdots = \frac{\beta_{0,N_{\mathrm{ANT}}-1}^{\mathrm{UL}}(n)h_{0,N_{\mathrm{ANT}}-1}^{r}(n)}{\tilde{\beta}_{0,N_{\mathrm{ANT}}-1}^{\mathrm{DL}}(n)h_{0,N_{\mathrm{ANT}}-1}^{t}(n)}$$

$$= \frac{h_{0}^{cr}(n)}{\dfrac{h_{Air}(n)\cdot s(n)}{h_{1}^{cr}(n)h_{0}^{ct}(n)}h_{0}^{ct}(n)} = \frac{h_{0}^{cr}(n)h_{1}^{cr}(n)}{h_{Air}(n)\cdot s(n)}$$

The two formulas of ratios of receiving channels to transmitting channels described above differ in that, when the RRU0 does not perform a channel estimation after receiving the correction signal in S302, there is one more $s(n)$.

Perform a transmitting channel compensation to the RRU1 according to the second transmitting self-correction coefficient, a ratio of a receiving channel to a transmitting channel of the compensated RRU1 is:

$$\frac{\beta_{1,0}^{\mathrm{UL}}(n)h_{1,0}^{r}(n)}{\tilde{\beta}_{1,0}^{\mathrm{DL}}(n)h_{1,0}^{t}(n)} = \frac{\beta_{1,1}^{\mathrm{UL}}(n)h_{1,1}^{r}(n)}{\tilde{\beta}_{1,1}^{\mathrm{DL}}(n)h_{1,1}^{t}(n)} = \cdots = \frac{\beta_{1,N_{\mathrm{ANT}}-1}^{\mathrm{UL}}(n)h_{1,N_{\mathrm{ANT}}-1}^{r}(n)}{\tilde{\beta}_{1,N_{\mathrm{ANT}}-1}^{\mathrm{DL}}(n)h_{1,N_{\mathrm{ANT}}-1}^{t}(n)}$$

$$= \frac{h_{1}^{cr}(n)}{\dfrac{h_{Air}(n)}{h_{0}^{cr}(n)h_{1}^{ct}(n)}h_{1}^{ct}(n)} = \frac{h_{0}^{cr}(n)h_{1}^{cr}(n)}{h_{Air}(n)}$$

When the RRU1 does not perform a channel estimation after receiving the correction signal in S302, a ratio of a receiving channel to a transmitting channel of the compensated RRU1 is:

$$\frac{\beta_{1,0}^{\mathrm{UL}}(n)h_{1,0}^{r}(n)}{\tilde{\beta}_{1,0}^{\mathrm{DL}}(n)h_{1,0}^{t}(n)} = \frac{\beta_{1,1}^{\mathrm{UL}}(n)h_{1,1}^{r}(n)}{\tilde{\beta}_{1,1}^{\mathrm{DL}}(n)h_{1,1}^{t}(n)} = \cdots = \frac{\beta_{1,N_{\mathrm{ANT}}-1}^{\mathrm{UL}}(n)h_{1,N_{\mathrm{ANT}}-1}^{r}(n)}{\tilde{\beta}_{1,N_{\mathrm{ANT}}-1}^{\mathrm{DL}}(n)h_{1,N_{\mathrm{ANT}}-1}^{t}(n)}$$

$$= \frac{h_{1}^{cr}(n)}{\dfrac{h_{Air}(n)\cdot s(n)}{h_{0}^{cr}(n)h_{1}^{ct}(n)}h_{1}^{ct}(n)} = \frac{h_{0}^{cr}(n)h_{1}^{cr}(n)}{h_{Air}(n)\cdot s(n)}$$

The two formulas of ratios of receiving channels to transmitting channels described above differ in that, when the RRU1 does not perform a channel estimation after receiving the correction signal in S303, there is one more $s(n)$.

It can be seen that, after performing a transmitting channel compensation to an RRU0 and an RRU1 respectively, ratios of receiving channel responses to transmitting channel responses of each service channel of the RRU0 and RRU1 are the same, all of which are $\dfrac{h_{0}^{cr}(n)h_{1}^{cr}(n)}{h_{Air}(n)}$ or $\dfrac{h_{0}^{cr}(n)h_{1}^{cr}(n)}{h_{Air}(n)\cdot s(n)}$, that is, a joint channel correction among multiple RRUs are realized.

Alternatively, take a ratio of the first receiving self-correction coefficient to the first compensation coefficient $\mu_0(n)$ as the first receiving correction coefficient $\tilde{\beta}_{0,i}^{\mathrm{UL}}(n)$, take a ratio of the second receiving self-correction coefficient to the second compensation coefficient $\mu_1(n)$ as the second receiving correction coefficient $\tilde{\beta}_{1,i}^{\mathrm{UL}}(n)$, that is:

$$\tilde{\beta}_{k,i}^{\mathrm{UL}}(n) = \frac{\beta_{k,i}^{\mathrm{UL}}(n)}{\mu_k(n)}, k = 0,1$$

Alternatively, take a ratio of a first transceiving joint self-correction coefficient to the first compensation coefficient $\mu_0(n)$ as a first transceiving joint correction coefficient $\hat{\beta}_{0,i}(n)$, take a ratio of a second transceiving joint self-correction coefficient to the second compensation coefficient $\mu_1(n)$ as a second transceiving joint correction coefficient $\hat{\beta}_{1,i}(n)$, that is:

$$\hat{\beta}_{k,i}(n) = \frac{\beta_{k,i}(n)}{\mu_k(n)}, k = 0,1$$

The compensation method is similar to that of the first transmitting correction coefficient, and will not be repeated in this embodiment.

It should be noted that, after a correction coefficient is acquired, a joint channel correction among multiple RRUs has been realized, channel compensation subsequently performed according to the correction coefficient may be for the purpose of verifying the correction coefficient, or performing channel compensation before transmitting a normal signal.

In this embodiment, a first self-correction coefficient and a second self-correction coefficient are acquired by performing a self-correction to an RRU0 and an RRU1 respectively, then a first compensation coefficient and a second compensation coefficient are acquired through transmitting and receiving correction signals to or from each other via any antenna of the RRU0 and any antenna of the RRU1, a first correction coefficient and a second correction coefficient are acquired according to the first self-correction coefficient, the first compensation coefficient, the second self-correction coefficient and the second compensation coefficient, and channel compensation is performed to the RRU0 and the RRU1 respectively, thus the joint channel correction among multiple RRUs are realized.

Embodiment 2

As shown in FIG. 1 and FIG. 2, Embodiment 2 is also described by taking an example of channel correction between two RRUs where each RRU includes 4 antennas (the actual number of antennas can be any integer).

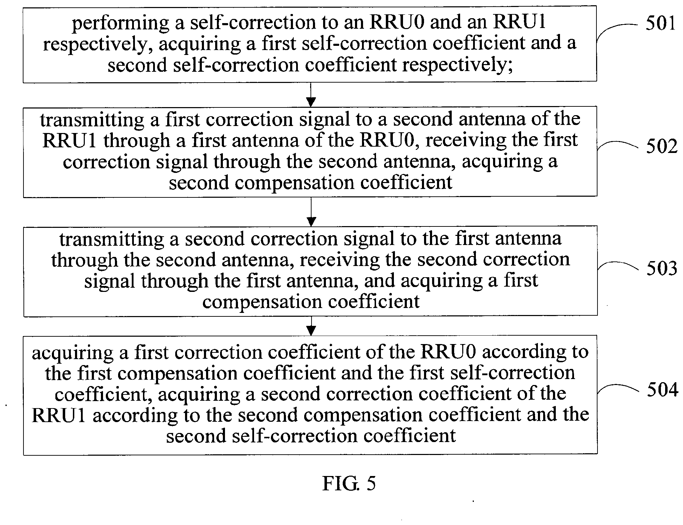

FIG. 5 is a schematic flow chart of a method for joint channel correction among multiple RRUs provided by Embodiment 2, as shown in FIG. 5, the method includes:

S501: performing a self-correction to an RRU0 and an RRU1 respectively;

In this embodiment, the RRU0 and the RRU1 are a first RRU and a second RRU respectively, and this step is the same as S301 in Embodiment 1, after completing the self-correction, the RRU0 and the RRU1 acquire a first self-correction coefficient and a second self-correction coefficient respectively, where the first self-correction coefficient includes a first receiving self-correction coefficient and a first transmitting self-correction coefficient, and the second self-correction coefficient includes a second receiving self-correction coefficient and a second transmitting self-correction coefficient.

S502: transmitting a correction signal through a first antenna of the RRU0, and receiving the correction signal through a second antenna of the RRU1; transmitting the correction signal through the second antenna of the RRU1, and receiving the correction signal through the first antenna of the RRU0;

This embodiment is mainly the same as S302 in Embodiment 1, the difference lies in that the correction signals are different, in this embodiment, the correction signal is a reference sequence S, thus the correction signal transmitted by the $n^{\mathrm{th}}$ subcarrier of an antenna 0 of the RRU0 is:

$$s(n), \mathrm{n}=0,1,\cdots,\mathrm{N}\text{-}1$$

The correction signal received by the $n^{\mathrm{th}}$ subcarrier of an antenna 0 of the RRU1 is:

$$\tilde{r}_{1,0}(n) = h_{1,0}^{r}(n) \cdot h_{Air}(n) \cdot h_{0,0}^{t}(n) \cdot s(n), \text{n=0,1,...,N-1}$$

After the RRU1 receives the correction signal, a baseband unit corresponding to the RRU1 performs a channel estimation according to the reference sequence S, then a second channel response estimated by the $n^{th}$ subcarrier is:

$$\gamma_{1,0}(n) = h_{1,0}^{r}(n) \cdot h_{Air}(n) h_{0,0}^{t}(n), \text{n=0,1,...,N-1}$$

Alternatively, the RRU1, after receiving the correction signal, does not perform a channel estimation, then a second channel response of the $n^{th}$ subcarrier is:

$$\gamma_{1,0}(n) = h_{1,0}^{r}(n) \cdot h_{Air}(n) h_{0,0}^{t}(n) \cdot s(n), \text{n=0,1,...,N-1}$$

The correction signal transmitted by the $n^{th}$ subcarrier of the antenna 0 of the RRU1 is:

$$s(n), \text{n=0,1,...,N-1}$$

The correction signal received by the $n^{th}$ subcarrier of an antenna 0 of the RRU0 is:

$$\tilde{r}_{0,0}(n) = h_{0,0}^{r}(n) \cdot h_{Air}(n) \cdot h_{1,0}^{t}(n) \cdot s(n), \text{n=0,1,...,N-1}$$

The RRU0, after receiving the correction signal, performs a channel estimation according to the reference sequence S, then a first channel response estimated by the $n^{th}$ subcarrier is:

$$\gamma_{0,0}(n) = h_{0,0}^{r}(n) \cdot h_{Air}(n) \cdot h_{1,0}^{t}(n), \text{n=0,1,...,N-1}$$

Alternatively, the RRU0, after receiving the correction signal, does not perform a channel estimation, then a first channel response of the $n^{th}$ subcarrier is:

$$\gamma_{0,0}(n) = h_{0,0}^{r}(n) \cdot h_{Air}(n) \cdot h_{1,0}^{t}(n) \cdot s(n), \text{n=0,1,...,N-1}$$

S503: acquiring a first compensation coefficient and a second compensation coefficient according to the first channel response and the second channel response;

Transmit the first transmitting self-correction coefficient $\beta_{0,0}^{DL} = \dfrac{1}{h_{0,0}^{t}(n) h_{0}^{cr}(n)}$, $\text{n=0,1,...,N-1}$ of the service channel 0 acquired during the self-correction of the RRU0 in step 501 to the RRU1 via X2 interfaces or private communication interfaces between a baseband unit corresponding to the RRU0 and a baseband unit corresponding to the RRU1, and then multiply $\gamma_{1,0}$ (n), $\beta_{0,0}^{DL}$ and $\beta_{1,0}^{UL}$ and take product as the second compensation coefficient $\mu_1(n)$ according to the second receiving self-correction coefficient $\beta_{1,0}^{UL} = \dfrac{1}{h_{1,0}^{r}(n) h_{1}^{ct}(n)}$, $\text{n=0,1,...,N-1}$ of the service channel 0 acquired during the self-correction of the RRU1 in S501:

$$\mu_1(n) = \gamma_{1,0}(n)\beta_{0,0}^{\mathrm{DL}}\beta_{1,0}^{\mathrm{UL}} = h_{1,0}^r(n)h_{Air}(n)h_{0,0}^t(n)\cdot\frac{1}{h_{0,0}^t(n)h_0^{cr}(n)}\cdot\frac{1}{h_{1,0}^r(n)h_1^{ct}(n)} = \frac{h_{Air}(n)}{h_1^{ct}(n)h_0^{cr}(n)}$$

$$, , \quad \mathrm{n}=0,1,\ldots,\mathrm{N}\text{-}1$$

Alternatively, when the RRU1 does not perform a channel estimation after receiving the correction signal:

$$\mu_1(n) = \gamma_{1,0}(n)\beta_{0,0}^{\mathrm{DL}}\beta_{1,0}^{\mathrm{UL}} = h_{1,0}^r(n)h_{Air}(n)h_{0,0}^t(n)s(n)\cdot\frac{1}{h_{0,0}^t(n)h_0^{cr}(n)}\cdot\frac{1}{h_{1,0}^r(n)h_1^{ct}(n)} = \frac{h_{Air}(n)s(n)}{h_1^{ct}(n)h_0^{cr}(n)}$$

$$, \quad \mathrm{n}=0,1,\ldots,\mathrm{N}\text{-}1$$

Transmit the second receiving self-correction coefficient $\beta_{1,0}^{\mathrm{UL}} = h_{1,0}^r(n)h_1^{ct}(n)$ , n=0,1,...,N-1 of the service channel 0 acquired during the self-correction of the RRU1 in step 501 to the RRU0 via X2 interfaces or private communication interfaces between a baseband unit corresponding to the RRU0 and a baseband unit corresponding to the RRU1, and then multiply $\gamma_{0,0}(\mathrm{n})$, $\beta_{1,0}^{\mathrm{UL}}$ and $\beta_{0,0}^{\mathrm{DL}}$ and take product as the first compensation coefficient $\mu_0(n)$ according to the first transmitting self-correction coefficient $\beta_{0,0}^{\mathrm{DL}} = h_{0,0}^t(n)h_0^{cr}(n)$, n=0,1,...,N-1 of the service channel 0 acquired during the self-correction of the RRU0 in step 501:

$$\mu_0(n) = \gamma_{0,0}(n)\beta_{1,0}^{\mathrm{UL}}\beta_{0,0}^{\mathrm{DL}} = h_{0,0}^r(n)h_{Air}(n)h_{1,0}^t(n)\cdot\frac{1}{h_{0,0}^r(n)h_0^{ct}(n)}\cdot\frac{1}{h_{1,0}^t(n)h_1^{cr}(n)} = \frac{h_{Air}(n)}{h_0^{ct}(n)h_1^{cr}(n)}$$

$$, \quad \mathrm{n}=0,1,\ldots,\mathrm{N}\text{-}1$$

Alternatively, when the RRU1 does not perform a channel estimation after receiving the correction signal:

$$\mu_0(n) = \gamma_{0,0}(n)\beta_{1,0}^{\mathrm{UL}}\beta_{0,0}^{\mathrm{DL}} = h_{0,0}^r(n)h_{Air}(n)h_{1,0}^t(n)s(n)\cdot\frac{1}{h_{0,0}^r(n)h_0^{ct}(n)}\cdot\frac{1}{h_{1,0}^t(n)h_1^{cr}(n)} = \frac{h_{Air}(n)s(n)}{h_0^{ct}(n)h_1^{cr}(n)}$$

$$, \quad \mathrm{n}=0,1,\ldots,\mathrm{N}\text{-}1$$

It should be noted that, in this embodiment, it may be a case that transmission and reception of correction signals are performed among RRUs firstly, and then compensation coefficients are calculated, it may also be a case that an RRU0 transmits a first correction signal to an RRU1 firstly, the RRU1 calculates a second compensation coefficient after receiving the first correction coefficient, and then the RRU1 transmits a second correction signal to the RRUO, and the RRU0 calculates a first compensation coefficient after receiving the second correction signal.

S504: acquiring a first correction coefficient according to the first compensation coefficient and the first self-correction coefficient, acquiring a second correction coefficient according to the second compensation coefficient and the second self-correction coefficient, and performing channel compensation to the RRU0 and the RRU1 respectively.

Multiply the first compensation coefficient $\mu_0(n)$ and the first transmitting self-correction coefficient and take product as the first transmitting correction coefficient $\tilde{\beta}_{k,i}^{\mathrm{DL}}(n)$; multiply the second compensation coefficient $\mu_1(n)$ and the second transmitting self-correction coefficient and take product as the second transmitting correction coefficient

$\tilde{\beta}_{k,i}^{\mathrm{DL}}(n)$, that is:

$$\tilde{\beta}_{k,i}^{\mathrm{DL}}(n) = \mu_k(n)\beta_{k,i}^{\mathrm{DL}}(n)$$

Perform a transmitting channel compensation to the RRU0 according to the first transmitting correction coefficient, a ratio of a receiving channel to a transmitting channel of the compensated RRU0 is:

$$\frac{\beta_{0,0}^{\mathrm{UL}}(n)h_{0,0}^{r}(n)}{\tilde{\beta}_{0,0}^{\mathrm{DL}}(n)h_{0,0}^{t}(n)} = \frac{\beta_{0,1}^{\mathrm{UL}}(n)h_{0,1}^{r}(n)}{\tilde{\beta}_{0,1}^{\mathrm{DL}}(n)h_{0,1}^{t}(n)} = \cdots = \frac{\beta_{0,N_{\mathrm{ANT}}-1}^{\mathrm{UL}}(n)h_{0,N_{\mathrm{ANT}}-1}^{r}(n)}{\tilde{\beta}_{0,N_{\mathrm{ANT}}-1}^{\mathrm{DL}}(n)h_{0,N_{\mathrm{ANT}}-1}^{t}(n)}$$

$$= \frac{h_0^{cr}(n)}{\dfrac{h_{Air}(n)}{h_1^{cr}(n)h_0^{ct}(n)}h_0^{ct}(n)} = \frac{h_0^{cr}(n)h_1^{cr}(n)}{h_{Air}(n)}$$

When the RRU0 does not perform a channel estimation after receiving the correction signal in S502, a ratio of a receiving channel to a transmitting channel of the compensated RRU0 is:

$$\frac{\beta_{0,0}^{\mathrm{UL}}(n)h_{0,0}^{r}(n)}{\tilde{\beta}_{0,0}^{\mathrm{DL}}(n)h_{0,0}^{t}(n)} = \frac{\beta_{0,1}^{\mathrm{UL}}(n)h_{0,1}^{r}(n)}{\tilde{\beta}_{0,1}^{\mathrm{DL}}(n)h_{0,1}^{t}(n)} = \cdots = \frac{\beta_{0,N_{\mathrm{ANT}}-1}^{\mathrm{UL}}(n)h_{0,N_{\mathrm{ANT}}-1}^{r}(n)}{\tilde{\beta}_{0,N_{\mathrm{ANT}}-1}^{\mathrm{DL}}(n)h_{0,N_{\mathrm{ANT}}-1}^{t}(n)}$$

$$= \frac{h_0^{cr}(n)}{\dfrac{h_{Air}(n)\cdot s(n)}{h_1^{cr}(n)h_0^{ct}(n)}h_0^{ct}(n)} = \frac{h_0^{cr}(n)h_1^{cr}(n)}{h_{Air}(n)\cdot s(n)}$$

The two formulas of ratios of receiving channels to transmitting channels described above differ in that, when the RRU0 does not perform a channel estimation after receiving the correction signal in S402, there is one more $s(n)$.

Perform a transmitting channel compensation to the RRU1 according to the second transmitting self-correction coefficient, a ratio of a receiving channel to a transmitting channel of the compensated RRU1 is:

$$\frac{\beta_{1,0}^{\mathrm{UL}}(n)h_{1,0}^{r}(n)}{\tilde{\beta}_{1,0}^{\mathrm{DL}}(n)h_{1,0}^{t}(n)} = \frac{\beta_{1,1}^{\mathrm{UL}}(n)h_{1,1}^{r}(n)}{\tilde{\beta}_{1,1}^{\mathrm{DL}}(n)h_{1,1}^{t}(n)} = \cdots = \frac{\beta_{1,N_{\mathrm{ANT}}-1}^{\mathrm{UL}}(n)h_{1,N_{\mathrm{ANT}}-1}^{r}(n)}{\tilde{\beta}_{1,N_{\mathrm{ANT}}-1}^{\mathrm{DL}}(n)h_{1,N_{\mathrm{ANT}}-1}^{t}(n)}$$

$$= \frac{h_1^{cr}(n)}{\dfrac{h_{Air}(n)}{h_0^{cr}(n)h_1^{ct}(n)}h_1^{ct}(n)} = \frac{h_0^{cr}(n)h_1^{cr}(n)}{h_{Air}(n)}$$

When the RRU1 does not perform a channel estimation after receiving the correction signal in S502, a ratio of a receiving channel to a transmitting channel of the compensated RRU1 is:

$$\frac{\beta_{1,0}^{\mathrm{UL}}(n)h_{1,0}^{r}(n)}{\tilde{\beta}_{1,0}^{\mathrm{DL}}(n)h_{1,0}^{t}(n)} = \frac{\beta_{1,1}^{\mathrm{UL}}(n)h_{1,1}^{r}(n)}{\tilde{\beta}_{1,1}^{\mathrm{DL}}(n)h_{1,1}^{t}(n)} = \cdots = \frac{\beta_{1,N_{\mathrm{ANT}}-1}^{\mathrm{UL}}(n)h_{1,N_{\mathrm{ANT}}-1}^{r}(n)}{\tilde{\beta}_{1,N_{\mathrm{ANT}}-1}^{\mathrm{DL}}(n)h_{1,N_{\mathrm{ANT}}-1}^{t}(n)}$$

$$= \frac{h_1^{cr}(n)}{\dfrac{h_{Air}(n)\cdot s(n)}{h_0^{cr}(n)h_1^{ct}(n)}h_1^{ct}(n)} = \frac{h_0^{cr}(n)h_1^{cr}(n)}{h_{Air}(n)\cdot s(n)}$$

The two formulas of ratios of receiving channels to transmitting channels described above differ in that, when the RRU1 does not perform a channel estimation after receiving the correction signal in S503, there is one more $s(n)$.

It can be seen that, after performing a transmitting channel compensation to an RRU0 and an RRU1 respectively, ratios of receiving channel responses to transmitting channel responses of each service channel of the RRU0 and RRU1 are the same, all of which are $\dfrac{h_0^{cr}(n)h_1^{cr}(n)}{h_{Air}(n)}$ or $\dfrac{h_0^{cr}(n)h_1^{cr}(n)}{h_{Air}(n)\cdot s(n)}$, that is, a joint channel correction among multiple RRUs are realized.

Alternatively, take a ratio of the first receiving self-correction coefficient to the first compensation coefficient $\mu_0(n)$ as a new first receiving correction coefficient, take a ratio of the second receiving self-correction coefficient to the second compensation coefficient $\mu_1(n)$ as the second receiving correction coefficient, that is:

$$\tilde{\beta}_{k,i}^{\mathrm{UL}}(n) = \frac{\beta_{k,i}^{\mathrm{UL}}(n)}{\mu_k(n)}$$

Alternatively, take a ratio of a transceiving joint self-correction coefficient to the first compensation coefficient $\mu_0(n)$ as a first transceiving joint correction coefficient, take a ratio of a transceiving joint self-correction coefficient to the second compensation coefficient $\mu_1(n)$ as a new second transceiving joint correction coefficient, that is:

$$\hat{\beta}_{k,i}(n) = \frac{\tilde{\beta}_{k,i}(n)}{\mu_k(n)}$$

The compensation method is similar to the transmitting channel compensation performed according to the first transmitting correction coefficient, and will not be repeated in this embodiment.

In this embodiment, a first self-correction coefficient and a second self-correction coefficient are acquired by performing a self-correction to an RRU0 and an RRU1 respectively, then a first compensation coefficient and a second compensation coefficient are acquired through transmitting and receiving correction signals to each other via any antenna of the RRU0 and any antenna of the RRU1, a first correction coefficient and a second correction coefficient are acquired according to the first self-correction coefficient, the first compensation coefficient, the second self-correction coefficient and the second compensation coefficient, and channel compensation is performed to the RRU0 and the RRU1 respectively, thus the joint channel correction among multiple RRUs are realized.

Embodiment 3

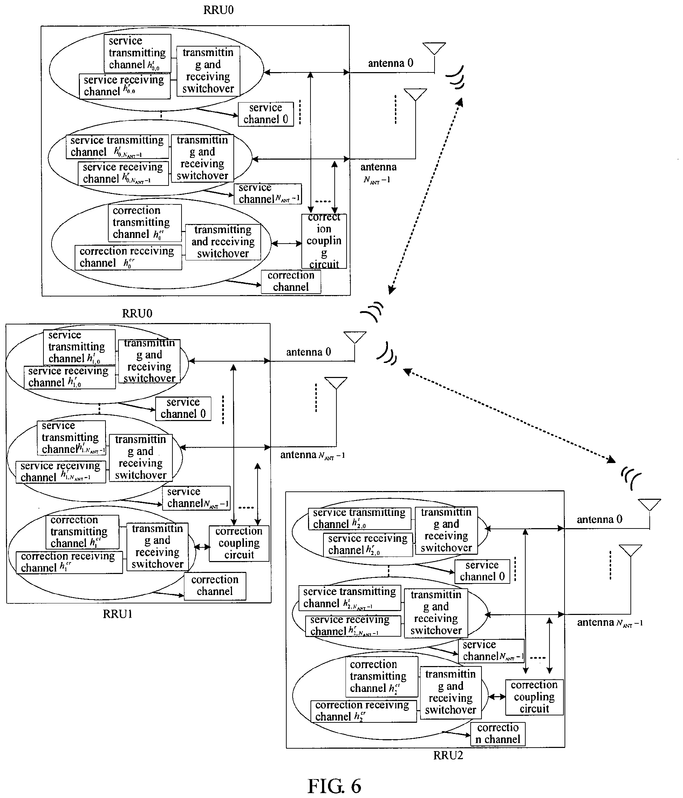

Embodiment 3 is described by taking an example of channel correction among three RRUs where each RRU includes 4 antennas (the actual number of antennas can be any integer), i is used to represent antennas of the RRUs in the embodiment, $i$=0, 1, 2, 3, as shown in FIG. 6, it should be noted that FIG. 6 is an external correction type, but an internal correction type is also applicable to this embodiment.

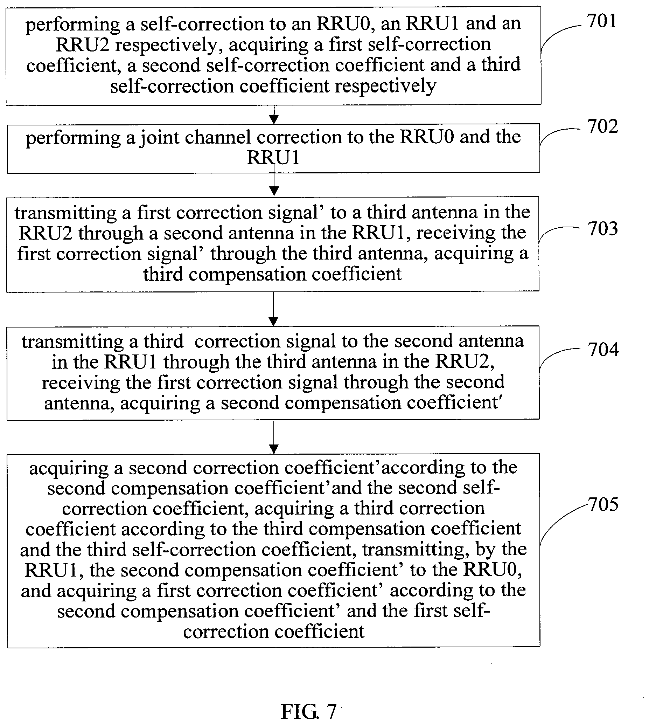

FIG. 7 is a schematic flow chart of a method for joint channel correction among multiple RRUs provided by Embodiment 3, as shown in FIG. 7, the method for joint channel correction among three RRUs includes:

S701: performing a self-correction to an RRUO, an RRU1 and an RRU2 respectively;

In this embodiment, the RRU0, the RRU1 and the RRU2 are a first RRU, a second RRU and a third RRU respectively, and this step is the same as S301 in Embodiment 1, after completing the self-correction, the RRU0, the RRU1 and the RRU2 acquire a first self-correction coefficient, a second self-correction coefficient and a third self-correction coefficient respectively, where the first self-correction coefficient includes a first receiving self-correction coefficient and a first transmitting self-correction coefficient, the second self-correction coefficient includes a second receiving self-correction coefficient and a second transmitting self-correction coefficient, and the third self-correction coefficient includes a third receiving self-correction coefficient and a third transmitting self-correction coefficient.

S702: selecting any two of the three RRUs, such as the RRU0 and the RRU1, making the RRU0 and the RRU1 complete a joint channel correction among multiple RRUs according to the method as described in Embodiment 1 or Embodiment 2;

after completing the joint channel correction among multiple RRUs of the RRU0 and the RRU1:

the first transmitting correction coefficient corresponding to the $i^{th}$ service channel of the RRU0 is:

$$\tilde{\beta}_{0,i}^{\mathrm{DL}}(n) = \frac{h_{Air,01}(n)}{h_0^{ct}(n)h_1^{cr}(n)h_0^{cr}(n)h_{0,i}^{t}(n)}, i = 0,1,\cdots,N_{\mathrm{ANT}}-1$$

the first receiving self-correction coefficient corresponding to the $i^{th}$ service channel of the RRU0 is:

$$\beta_{0,i}^{\mathrm{UL}}(n) = \frac{1}{h_0^{ct}(n)h_{0,i}^{r}(n)}, i = 0,1,\cdots,N_{\mathrm{ANT}}-1$$

$h_{Air,01}(n)$ indicates a corresponding air-interface channel response during joint channel correction among RRUs when the RRU1 selects a certain antenna (which is an antenna 0 in this embodiment) for transmitting and the RRU0 selects a certain antenna (which is an antenna 0 in this embodiment) for receiving. As for the TDD, since uplink and downlink air-interface channel responses are the same, $h_{Air,10}(n) = h_{Air,01}(n)$.

The second transmitting correction coefficient corresponding to the $i^{th}$ service channel of the RRU1 is:

$$\tilde{\beta}_{1,i}^{\mathrm{DL}}(n) = \frac{h_{Air,01}(n)}{h_1^{ct}(n)h_0^{cr}(n)h_1^{cr}(n)h_{1,i}^{t}(n)}, i = 0,1,\cdots,N_{\mathrm{ANT}}-1$$

The second receiving self-correction coefficient corresponding to the $i^{th}$ service channel of the RRU1 is:

$$\beta_{1,i}^{\mathrm{UL}}(n) = \frac{1}{h_1^{ct}(n)h_{1,i}^{r}(n)}, i = 0,1,\cdots,N_{\mathrm{ANT}}-1$$

S703: after respective correction coefficient is calculated by the RRU0 and the RRU1 respectively, selecting any RRU of the RRU0 and the RRU1 to perform a joint channel correction between RRUs together with the RRU2 according to the method as described in Embodiment 1 or Embodiment 2;

Details are described hereunder where the method of Embodiment 1 is selected:
After the RRU0 and the RRU1 calculate respective correction coefficient respectively, the RRU0 and the RRU1 are treated as a virtual RRU, and an RRU is selected for a joint channel correction with the RRU2. In this embodiment, the RRU1 is selected for the joint channel correction among multiple RRUs with the RRU2. As in S701, a self-correction has been performed to the RRU0, the RRU1 and the RRU2, thus, when the RRU1 and the RRU2 perform the joint channel correction, the self-correction step can be omitted, a second correction signal' is transmitted through the second antenna of the RRU1 directly, and the second correction signal' is received through a third antenna of the RRU2; a third correction signal is transmitted through the third antenna of the RRU2, and the third correction signal is received through the second antenna of the RRU1; the second antenna and the third antenna are any antenna of the RRU1 and the RRU2 respectively. In this embodiment, the RRU1 and the RRU2 respectively select an antenna 0 corresponding to a service channel 0 as the second antenna and the third antenna:

1) the RRU1 is enabled to transmit a second correction signal' via the second antenna, and the RRU2 is enabled to receive the second correction signal' via the third antenna, where the second correction signal' is: selecting a specific correction reference sequence, such as various training sequences or reference signal sequences used in an LTE and a WiMAX system, marked as reference sequence S, multiplying the correction reference sequence and the second transmitting correction coefficient $\tilde{\beta}_{1,0}^{\mathrm{DL}}(n)$ and taking product as the second correction signal', thus the second correction signal' is distinguished from the second correction signal in embodiments described above.

Alternatively, when the RRU1 transmits the second correction signal' via the second antenna, other transmitting channels except the transmitting channel of the service channel corresponding to the second antenna of the RRU1 are turned off, so as to avoid interferences.

The second correction signal' transmitted by the $n^{\text{th}}$ subcarrier of the second antenna of the RRU1 is:

$$\tilde{\beta}_{1,0}^{\mathrm{DL}}(n)s(n), \quad \mathrm{n}=0,1\ldots,\mathrm{N}\text{-}1$$

The second correction signal' received by the $n^{\text{th}}$ subcarrier of the third antenna of the RRU2 is:

$$\tilde{r}'_{2,0}(n) = h^r_{2,0}(n) \cdot h_{Air,12}(n) \cdot h^t_{1,0}(n) \cdot \tilde{\beta}_{1,0}^{\mathrm{DL}}(n) \cdot s(n), \mathrm{n}=0,1\ldots,\mathrm{N}\text{-}1$$

The RRU2, after receiving the second correction signal', performs a channel estimation according to the reference sequence S, according to $\tilde{\beta}_{1,0}^{\mathrm{DL}}(n) = \dfrac{h_{Air,01}(n)}{h_1^{ct}(n)h_0^{cr}(n)h_1^{cr}(n)h_{1,0}^t(n)}$ in step S702, then a third channel response estimated by the $n^{\text{th}}$ subcarrier is:

$$\gamma_{2,0}(n) = \frac{h^r_{2,0}(n)h_{Air,01}(n)h_{Air,12}(n)}{h_1^{ct}(n)h_0^{cr}(n)h_1^{cr}(n)}, \quad \mathrm{n}=0,1,\ldots,\mathrm{N}\text{-}1$$

Alternatively, the RRU2, after receiving the correction signal, does not perform a channel estimation, then a third channel response of the $n^{\text{th}}$ subcarrier is:

$$\gamma_{2,0}(n) = \frac{h^r_{2,0}(n)h_{Air,01}(n)h_{Air,12}(n)}{h_1^{ct}(n)h_0^{cr}(n)h_1^{cr}(n)} \cdot s(n), \quad \mathrm{n}=0,1,\ldots,\mathrm{N}\text{-}1$$

2) the RRU2 is enabled to transmit a third correction signal via the third antenna, and the RRU1 is enabled to receive the third correction signal via the second antenna, where the third correction signal is: multiplying the correction reference sequence such as the reference sequence S and the third transmitting self-correction coefficient and taking product as the third correction signal.

Alternatively, when the RRU2 transmits the third correction signal via the third antenna, other transmitting channels except the transmitting channel of the service channel corresponding to the third antenna of the RRU2 are turned off, so as to avoid interferences.

The third correction signal transmitted by the $n^{\text{th}}$ subcarrier of the third antenna of the RRU2 is:

$$\beta_{2,0}^{\mathrm{DL}}(n)s(n), \mathrm{n}=0,1,\ldots,\mathrm{N}\text{-}1$$

The third correction signal received by the $n^{\text{th}}$ subcarrier of the second antenna of the RRU1 is:

$$\tilde{r}'_{1,0}(n) = h^r_{1,0}(n) \cdot h_{Air,12}(n) \cdot h^t_{2,0}(n) \cdot \beta^{DL}_{2,0}(n) \cdot s(n), \text{ n=0,1,...,N-1}$$

The RRU1, after receiving the correction signal, performs a channel estimation according to the reference sequence S, then a second channel response' estimated by the $n^{th}$ subcarrier is:

$$\gamma'_{1,0}(n) = \frac{h^r_{1,0}(n) \cdot h_{Air,12}(n)}{h^{cr}_2(n)}, \text{ n=0,1,...,N-1}$$

Alternatively, the RRU1, after receiving the correction signal, does not perform a channel estimation, then a second channel response' of the $n^{th}$ subcarrier is:

$$\gamma'_{1,0}(n) = \frac{h^r_{1,0}(n) \cdot h_{Air,12}(n)}{h^{cr}_2(n)} \cdot s(n), \text{ n=0,1,...,N-1}$$

S704: acquiring a second compensation coefficient' and a third compensation coefficient according to the second channel response' and the third channel response;

In this embodiment, the RRU2 selects an antenna 0 corresponding to a service channel 0 as the third antenna, thus, according to the third receiving self-correction coefficient $\beta^{UL}_{2,0} = \dfrac{1}{h^r_{2,0}(n)h^{ct}_2(n)}$, n=0,1,...,N-1 of the service channel 0 acquired during the self-correction of the RRU2 in step 701, multiply $\gamma_{2,0}(n)$ and $\beta^{UL}_{2,0}$ and take product as the third compensation coefficient $\upsilon_2(n)$:

$$\upsilon_2(n) = \frac{h_{Air,0,1}(n)h_{Air,1,2}(n)}{h^{ct}_1(n)h^{cr}_0(n)h^{cr}_1(n)h^{ct}_2(n)}, \text{ n=0,1,...,N-1}$$

Alternatively, when the RRU2 does not perform a channel estimation after receiving the correction signal:

$$\upsilon_2(n) = \frac{h_{Air,0,1}(n)h_{Air,1,2}(n)}{h^{ct}_1(n)h^{cr}_0(n)h^{cr}_1(n)h^{ct}_2(n)} \cdot s(n), \text{ n=0,1,...,N-1}$$

In this embodiment, the RRU1 selects an antenna 0 corresponding to a service channel 0 as the second antenna, thus, according to the second receiving self-correction coefficient $\beta^{UL}_{1,0} = \dfrac{1}{h^r_{1,0}(n)h^{ct}_1(n)}$, n=0,1,...,N-1

of the service channel 0 acquired during the self-correction of the RRU1 in step 701, multiply $\gamma'_{1,0}(n)$ and $\beta^{UL}_{1,0}$ and take product as the second compensation coefficient' $\upsilon_1(n)$:

$$\upsilon_1(n) = \frac{h_{Air,1,2}(n)}{h^{ct}_1(n)h^{cr}_2(n)}, \text{ n=0,1,...,N-1}$$

Alternatively, when the RRU1 does not perform a channel estimation after receiving the correction signal:

$$\upsilon_1\left(n\right) = \frac{h_{Air,1,2}\left(n\right)}{h_1^{ct}\left(n\right)h_2^{cr}\left(n\right)} \cdot s\left(n\right), \text{n=0,1,...,N-1}$$

It should be noted that, in this embodiment, it may be a case that transmission and reception of correction signals are completed among RRUs firstly, and then compensation coefficients are calculated, it may also be a case that an RRU1 transmits a second correction signal' to an RRU2 firstly, the RRU2 calculates a third compensation coefficient after receiving the second correction coefficient' , and then the RRU2 transmits a third correction signal to the RRU1, and the RRU1 calculates a second compensation coefficient' after receiving the third correction signal.

S705: acquiring a second correction coefficient' according to the second compensation coefficient' and the second correction coefficient, acquiring a third correction coefficient according to the third compensation coefficient and the third self-correction coefficient, and performing channel compensation to the RRU1 and the RRU2 respectively.

Multiply the second compensation coefficient' $\upsilon_1(n)$ and the second transmitting correction coefficient and take product as the second transmitting correction coefficient' $\tilde{\beta}_{1,i}^{\prime\mathrm{DL}}\left(n\right) = \upsilon_1\left(n\right)\tilde{\beta}_{1,i}^{\mathrm{DL}}\left(n\right)$; multiply the third compensation coefficient $\upsilon_2(n)$ and the third transmitting self-correction coefficient and take product as the third transmitting correction coefficient $\tilde{\beta}_{2,i}^{\prime\mathrm{DL}}\left(n\right) = \upsilon_2\left(n\right)\beta_{2,i}^{\mathrm{DL}}\left(n\right)$.

Before or after S705, it needs to transmit the second compensation coefficient' $\upsilon_1(n)$ to a cell 0 where the RRU0 locates via a cell 1 where the RRU1 locates, and update the first correction coefficient of the RRU0 according to the second compensation coefficient' $\upsilon_1(n)$, the updated first transmitting correction coefficient' of the RRU0 is:

$$\tilde{\beta}_{0,i}^{\prime\mathrm{DL}}\left(n\right) = \upsilon_1\left(n\right)\tilde{\beta}_{0,i}^{\mathrm{DL}}\left(n\right).$$

Perform a transmitting channel compensation to the RRU0 according to the first transmitting correction coefficient' , a ratio of a receiving channel to a transmitting channel of the compensated RRU0 is:

$$\frac{\beta_{0,0}^{\mathrm{UL}}\left(n\right)h_{0,0}^r\left(n\right)}{\tilde{\beta}_{0,0}^{\prime\mathrm{DL}}\left(n\right)h_{0,0}^t\left(n\right)} = \frac{\beta_{0,1}^{\mathrm{UL}}\left(n\right)h_{0,1}^r\left(n\right)}{\tilde{\beta}_{0,1}^{\prime\mathrm{DL}}\left(n\right)h_{0,1}^t\left(n\right)} = \cdots = \frac{\beta_{0,N_{\mathrm{ANT}}-1}^{\mathrm{UL}}\left(n\right)h_{0,N_{\mathrm{ANT}}-1}^r\left(n\right)}{\tilde{\beta}_{0,N_{\mathrm{ANT}}-1}^{\prime\mathrm{DL}}\left(n\right)h_{0,N_{\mathrm{ANT}}-1}^t\left(n\right)}$$

$$= \frac{\dfrac{1}{h_0^{ct}\left(n\right)}}{\dfrac{h_{Air,1,2}\left(n\right)}{h_1^{ct}\left(n\right)h_2^{cr}\left(n\right)} \cdot \dfrac{h_{Air,0,1}\left(n\right)}{h_1^{cr}\left(n\right)h_0^{ct}\left(n\right)} \cdot \dfrac{1}{h_0^{cr}\left(n\right)}} = \frac{h_1^{cr}\left(n\right)h_2^{cr}\left(n\right)h_1^{ct}\left(n\right)h_0^{cr}\left(n\right)}{h_{Air,1,2}\left(n\right)h_{Air,0,1}\left(n\right)}$$

Perform a transmitting channel compensation to the RRU1 according to the second transmitting correction coefficient' , a ratio of a receiving channel to a transmitting channel of the compensated RRU1 is:

$$\frac{\beta_{1,0}^{\mathrm{UL}}\left(n\right)h_{1,0}^r\left(n\right)}{\tilde{\beta}_{1,0}^{\prime\mathrm{DL}}\left(n\right)h_{1,0}^t\left(n\right)} = \frac{\beta_{1,1}^{\mathrm{UL}}\left(n\right)h_{1,1}^r\left(n\right)}{\tilde{\beta}_{1,1}^{\prime\mathrm{DL}}\left(n\right)h_{1,1}^t\left(n\right)} = \cdots = \frac{\beta_{1,N_{\mathrm{ANT}}-1}^{\mathrm{UL}}\left(n\right)h_{1,N_{\mathrm{ANT}}-1}^r\left(n\right)}{\tilde{\beta}_{1,N_{\mathrm{ANT}}-1}^{\prime\mathrm{DL}}\left(n\right)h_{1,N_{\mathrm{ANT}}-1}^t\left(n\right)}$$

$$= \frac{\dfrac{1}{h_1^{ct}\left(n\right)}}{\dfrac{h_{Air,1,2}\left(n\right)}{h_1^{ct}\left(n\right)h_2^{cr}\left(n\right)} \cdot \dfrac{h_{Air,0,1}\left(n\right)}{h_0^{cr}\left(n\right)h_1^{ct}\left(n\right)} \cdot \dfrac{1}{h_1^{cr}\left(n\right)}} = \frac{h_1^{cr}\left(n\right)h_2^{cr}\left(n\right)h_1^{ct}\left(n\right)h_0^{cr}\left(n\right)}{h_{Air,1,2}\left(n\right)h_{Air,0,1}\left(n\right)}$$

Perform a transmitting channel compensation to the RRU2 according to the third transmitting correction coefficient, a ratio of a receiving channel to a transmitting channel of the compensated RRU2 is:

$$\frac{\beta_{2,0}^{\mathrm{UL}}(n)h_{2,0}^{r}(n)}{\tilde{\beta}_{2,0}^{\prime\mathrm{DL}}(n)h_{2,0}^{t}(n)}=\frac{\beta_{2,1}^{\mathrm{UL}}(n)h_{2,1}^{r}(n)}{\tilde{\beta}_{2,1}^{\prime\mathrm{DL}}(n)h_{2,1}^{t}(n)}=\cdots=\frac{\beta_{2,N_{\mathrm{ANT}}-1}^{\mathrm{UL}}(n)h_{2,N_{\mathrm{ANT}}-1}^{r}(n)}{\tilde{\beta}_{2,N_{\mathrm{ANT}}-1}^{\prime\mathrm{DL}}(n)h_{2,N_{\mathrm{ANT}}-1}^{t}(n)}$$

$$=\frac{\dfrac{1}{h_{2}^{ct}(n)}}{\dfrac{h_{Air,0,1}(n)h_{Air,1,2}(n)}{h_{1}^{ct}(n)h_{0}^{cr}(n)h_{1}^{cr}(n)h_{2}^{ct}(n)}\cdot\dfrac{1}{h_{2}^{cr}(n)}}=\frac{h_{1}^{cr}(n)h_{2}^{cr}(n)h_{1}^{ct}(n)h_{0}^{cr}(n)}{h_{Air,1,2}(n)h_{Air,0,1}(n)}$$

It can be seen that, after performing a transmitting channel compensation to an RRUO, an RRU1 and an RRU2 respectively, ratios of receiving channel responses to transmitting channel responses of each service channel in these three RRUs are the same, all of which are $\dfrac{h_{1}^{cr}(n)h_{2}^{cr}(n)h_{0}^{ct}(n)h_{0}^{cr}(n)}{h_{Air,0,1}(n)h_{Air,0,2}(n)}$, that is, a joint channel correction among multiple RRUs are realized.

Other optional steps of this embodiment are as described in Embodiment 1 and Embodiment 2, and will not be repeated in this embodiment.

It should be noted that, after a correction coefficient is acquired, a joint channel correction among multiple RRUs has been realized, channel compensation subsequently performed according to the correction coefficient subsequently may be for the purpose of verifying the correction coefficient, or performing channel compensation before transmitting a normal signal.

In this embodiment, a joint channel correction is performed to three RRUs by: firstly completing the joint channel correction of an RRU0 and an RRU1 according to the method as described in Embodiment 1 or Embodiment 2; then selecting the RRU1 to perform the joint channel correction together with the RRU2, acquiring, by the RRU1, a second compensation coefficient' and transmitting the second compensation coefficient' to an RRU0, after the RRU2 acquires a third compensation coefficient, updating, by the RRU0 and the RRU1, a first self-correction coefficient and a second self-correction coefficient according to the second compensation coefficient', and acquiring a first correction coefficient' and a second correction coefficient', acquiring, by the RRU2, a third self-correction coefficient according to the third compensation coefficient; and finally, performing channel compensation to the RRUO, RRU1 and RRU2 respectively.

Embodiment 4

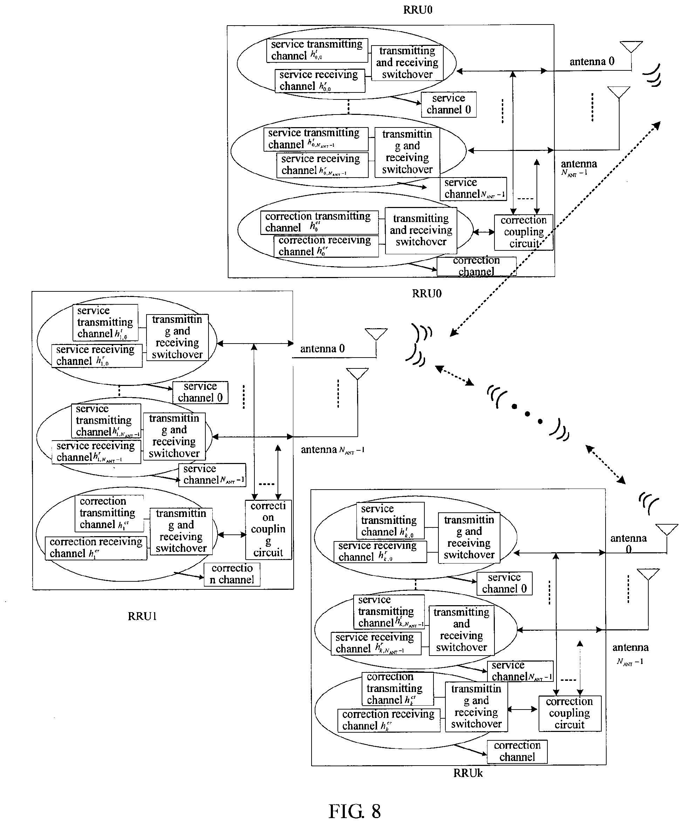

Embodiment 4 is described by taking an example of channel correction among k RRUs (k≥3) where each RRU includes 4 antennas (the actual number of antennas can be any integer), i is used to represent antennas of the RRUs in the embodiment, i=0, 1, 2, 3, as shown in FIG. 8, it should be noted that, FIG. 8 is an external correction type, but an internal correction type is also applicable to this embodiment.

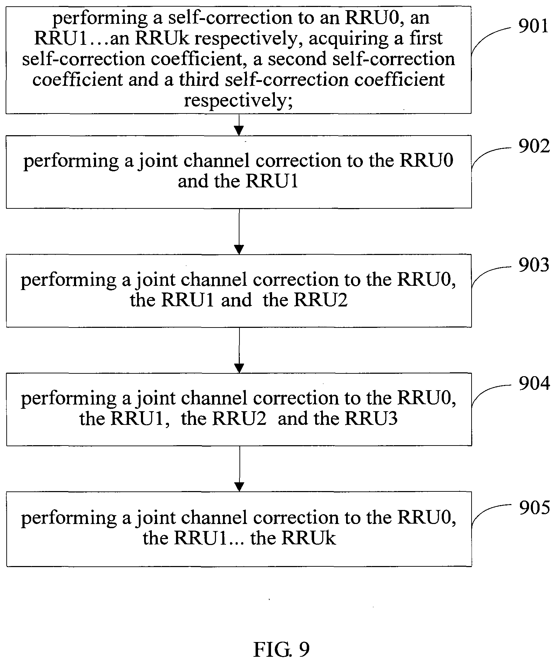

FIG. 9 is a schematic flow chart of a method for joint channel correction among multiple RRUs provided by Embodiment 1, as shown in FIG. 9, the method for joint channel correction among k RRUs includes:

S901: an RRUO, an RRU1... and an RRUk perform a self-correction respectively;

This embodiment is the same as S301 in Embodiment 1, after completing the self-correction, the RRUO, the RRU1... the RRUk acquires respective self-correction coefficient respectively.

S902: the RRU0 and the RRU1 complete a joint channel correction between RRUs according to the method as described in Embodiment 1 or Embodiment 2;

S903: the RRU0, the RRU1 and the RRU2 complete the joint channel correction according to the method as described in Embodiment 3; at this time, since the RRU0 and the RRU1 has completed the joint channel correction between two RRUs in S902, then the RRU0 and the RRU1 are treated as a virtual RRU, and continue to finish the joint channel correction between two RRUs together with the RRU2;

S904: after the RRU0, the RRU1 and the RRU2 complete the joint channel correction in S903, the RRU0, the RRU1 and the RRU2 are treated as a virtual RRU and continue to perform the joint channel correction together with the RRU3;

S905: and so forth, until the joint channel correction of all k RRUs are completed.

Embodiment 5

Embodiment 5 is also an embodiment of a joint channel correction among three RRUs, which is the same as Embodiment 3.

Embodiment 5 is described by taking an example of channel correction among 3 RRUs where each RRU includes 4 antennas (the actual number of antennas can be any integer), i is used to represent antennas of the RRUs in the embodiment, $i$=0, 1, 2, 3, as shown in FIG. 6, it should be noted that, FIG. 6 is an external correction type, but an internal correction type is also applicable to this embodiment.

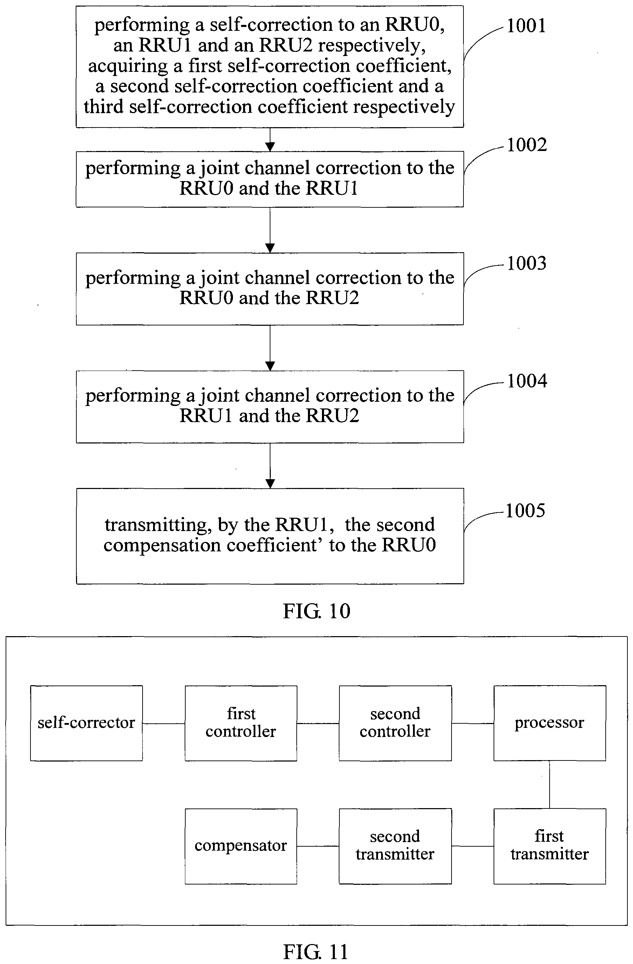

FIG. 10 is a schematic flow chart of a method for joint channel correction among multiple RRUs provided by Embodiment 5, as shown in FIG. 15, the method for joint channel correction among 3 RRUs includes:

S1001: performing a self-correction to an RRU0, an RRU1 and an RRU2 respectively;

This embodiment is the same as S301 in Embodiment 1, after completing the self-correction, the RRU0, the RRU1 and the RRU2 acquire a first self-correction coefficient, a second self-correction coefficient and a third self-correction coefficient respectively, where the first self-correction coefficient includes a first receiving correction coefficient and a first transmitting self-correction coefficient, the second self-correction coefficient includes a second receiving correction coefficient and a second transmitting self-correction coefficient, and the third self-correction coefficient includes a third receiving correction coefficient and a third transmitting self-correction coefficient.

A transmitting self-correction coefficient is:

$$\beta_{k,i}^{\mathrm{DL}}(n) = \frac{1}{h_k^{cr}(n)h_{k,i}^{t}(n)}, k = 0,1,2, i = 0,1,\cdots,N_{ANT}-1, \mathrm{n=0,1,\ldots,N\text{-}1}$$

A receiving self-correction coefficient is:

$$\beta_{k,i}^{\mathrm{UL}}(n) = \frac{1}{h_k^{ct}(n)h_{k,i}^{r}(n)}, k = 0,1,2, i = 0,1,\cdots,N_{ANT}-1, \mathrm{n=0,1,\ldots,N\text{-}1}$$

The first transmitting self-correction coefficient and the first receiving correction coefficient are respectively:

$$\beta_{0,i}^{\mathrm{DL}}(n) = \frac{1}{h_0^{cr}(n)h_{0,i}^{t}(n)}, \quad \beta_{0,i}^{\mathrm{UL}}(n) = \frac{1}{h_0^{ct}(n)h_{0,i}^{r}(n)}$$

The second transmitting self-correction coefficient and the second receiving correction coefficient are respectively:

$$\beta_{1,i}^{\mathrm{DL}}(n) = \frac{1}{h_1^{cr}(n)h_{1,i}^{t}(n)}, \quad \beta_{1,i}^{\mathrm{UL}}(n) = \frac{1}{h_1^{ct}(n)h_{1,i}^{r}(n)}$$

The third transmitting self-correction coefficient and the third receiving correction coefficient are respectively:

$$\beta_{2,i}^{\mathrm{DL}}(n) = \frac{1}{h_2^{cr}(n)h_{2,i}^{t}(n)}, \quad \beta_{2,i}^{\mathrm{UL}}(n) = \frac{1}{h_2^{ct}(n)h_{2,i}^{r}(n)}$$

S1002: completing, by the RRU0 and the RRU1, the joint channel correction according to the method as described in Embodiment 1 or Embodiment 2;

After completing the joint channel correction, the RRU0 and the RRU1 acquire a first correction coefficient and a second correction coefficient respectively. Channel compensation among RRUs may be selected to only act on a receiving correction coefficient, and may also be selected to only act on a transmitting correction coefficient, in a scenario of transceiving joint channel correction, act on a transceiving joint correction coefficient, details are described hereunder by taking the transmitting correction coefficient as an example.

The transmitting correction coefficient may be expressed as:

$$\tilde{\beta}_{k,i}^{\mathrm{DL}}(n) = \mu_k(n)\beta_{k,i}^{\mathrm{DL}}(n), k = 0,1$$

The first transmitting correction coefficient of the RRU0 is: $\tilde{\beta}_{0,i}^{\mathrm{DL}}(n) = \mu_0(n)\beta_{0,i}^{\mathrm{DL}}(n)$

The first receiving correction coefficient of the RRU0 is: $\tilde{\beta}_{0,i}^{\mathrm{UL}}(n) = \beta_{0,i}^{\mathrm{UL}}(n)$

A first compensation coefficient is: $\mu_0(n) = \dfrac{h_{Air,01}(n)}{h_1^{cr}(n)h_0^{ct}(n)}$

The second transmitting correction coefficient of the RRU1 is: $\tilde{\beta}_{1,i}^{\mathrm{DL}}(n) = \mu_1(n)\beta_{1,i}^{\mathrm{DL}}(n)$

The second receiving correction coefficient is: $\tilde{\beta}_{1,i}^{\mathrm{UL}}(n) = \beta_{1,i}^{\mathrm{UL}}(n)$

A second compensation coefficient is: $\mu_1(n) = \dfrac{h_{Air,01}(n)}{h_0^{cr}(n)h_1^{ct}(n)}$

S1003: completing, by the RRU0 and the RRU2, the joint channel correction according to the method as described in Embodiment 1 or Embodiment 2; acquiring a first transmitting correction coefficient' and a first receiving correction coefficient' of the RRU0, and a third transmitting correction coefficient and a third receiving correction coefficient of the RRU2.

The first transmitting correction coefficient' of the RRU0 is: $\tilde{\beta}_{0,i}^{\prime\mathrm{DL}}(n) = \mu_0'(n)\beta_{0,i}^{\mathrm{DL}}(n)$

The first receiving correction coefficient' is: $\tilde{\beta}_{0,i}^{\prime\mathrm{UL}}(n) = \beta_{0,i}^{\mathrm{UL}}(n)$

A first compensation coefficient' is: $\mu_0'(n) = \dfrac{h_{Air,02}(n)}{h_2^{cr}(n)h_0^{ct}(n)}$

The third transmitting correction coefficient of the RRU2 is: $\tilde{\beta}_{2,i}^{\mathrm{DL}}(n) = \mu_2(n)\beta_{2,i}^{\mathrm{DL}}(n)$

The third receiving correction coefficient is: $\tilde{\beta}_{2,i}^{\mathrm{UL}}(n) = \beta_{2,i}^{\mathrm{UL}}(n)$

A third compensation coefficient is: $\mu_2(n) = \dfrac{h_{Air,02}(n)}{h_0^{cr}(n)h_2^{ct}(n)}$

S1004: completing, by the RRU1 and the RRU2, the joint channel correction according to the method as described in Embodiment 1 or Embodiment 2;

After the RRU1 and the RRU2 complete the joint channel correction according to the method as described in Embodiment 1 or Embodiment 2, and after the RRU1 acquires a second compensation coefficient' and the RRU2 acquires a third compensation coefficient' , the RRU1 and the RRU2 update the second correction coefficient and the third correction coefficient according to the second compensation coefficient' and the third compensation coefficient' respectively, and channel compensation is performed to the RRU1 and the RRU2.

The second transmitting correction coefficient' of the RRU1 is: $\tilde{\tilde{\beta}}_{1,i}^{\mathrm{DL}}(n) = \mu_1'(n)\tilde{\beta}_{1,i}^{\mathrm{DL}}(n)$

The second receiving correction coefficient' is: $\tilde{\tilde{\beta}}_{1,i}^{\mathrm{UL}}(n) = \tilde{\beta}_{1,i}^{\mathrm{UL}}(n)$

The second compensation coefficient' is:

$$\mu_1'(n) = \frac{h_{Air,02}h_{Air,12}}{h_2^{cr}h_0^{cr}h_2^{ct}h_1^{ct}}$$

After the compensation:

$$\frac{\tilde{\tilde{\beta}}_{1,0}^{\mathrm{UL}}(n)h_{1,0}^r(n)}{\tilde{\tilde{\beta}}_{1,0}^{\mathrm{DL}}(n)h_{1,0}^t(n)} = \frac{\tilde{\tilde{\beta}}_{1,1}^{\mathrm{UL}}(n)h_{1,1}^r(n)}{\tilde{\tilde{\beta}}_{1,1}^{\mathrm{DL}}(n)h_{1,1}^t(n)} = \cdots = \frac{\tilde{\tilde{\beta}}_{1,N_{\mathrm{ANT}}-1}^{\mathrm{UL}}(n)h_{1,N_{\mathrm{ANT}}-1}^r(n)}{\tilde{\tilde{\beta}}_{1,N_{\mathrm{ANT}}-1}^{\mathrm{DL}}(n)h_{1,N_{\mathrm{ANT}}-1}^t(n)}$$

$$= \frac{\left(h_0^{cr}(n)\right)^2 h_1^{ct}(n)h_2^{ct}(n)h_1^{cr}(n)h_2^{cr}(n)}{h_{Air,01}(n)h_{Air,02}(n)h_{Air,12}(n)}$$

A third transmitting correction coefficient' of the RRU2 is: $\tilde{\tilde{\beta}}_{2,i}^{\mathrm{DL}}(n) = \mu_2'(n)\tilde{\beta}_{2,i}^{\mathrm{DL}}(n)$

A third receiving correction coefficient is: $\tilde{\tilde{\beta}}_{2,i}^{\mathrm{UL}}(n) = \tilde{\beta}_{2,i}^{\mathrm{UL}}(n)$

The third compensation coefficient' is:

$$\mu_2'(n) = \frac{h_{Air,01}h_{Air,12}}{h_1^{cr}(n)h_0^{cr}(n)h_1^{ct}(n)h_2^{ct}(n)}$$

After the compensation:

$$\frac{\tilde{\tilde{\beta}}_{2,0}^{\mathrm{UL}}(n)h_{2,0}^r(n)}{\tilde{\tilde{\beta}}_{2,0}^{\mathrm{DL}}(n)h_{2,0}^t(n)} = \frac{\tilde{\tilde{\beta}}_{2,1}^{\mathrm{UL}}(n)h_{2,1}^r(n)}{\tilde{\tilde{\beta}}_{2,1}^{\mathrm{DL}}(n)h_{2,1}^t(n)} = \cdots = \frac{\tilde{\tilde{\beta}}_{2,N_{\mathrm{ANT}}-1}^{\mathrm{UL}}(n)h_{1,N_{\mathrm{ANT}}-1}^r(n)}{\tilde{\tilde{\beta}}_{2,N_{\mathrm{ANT}}-1}^{\mathrm{DL}}(n)h_{1,N_{\mathrm{ANT}}-1}^t(n)}$$

$$= \frac{\left(h_0^{cr}(n)\right)^2 h_1^{ct}(n)h_2^{ct}(n)h_1^{cr}(n)h_2^{cr}(n)}{h_{Air,01}h_{Air,02}(n)h_{Air,12}}$$

It can be seen that the two compensated equations are the same, indicating that the joint channel correction between the RRU1 and the RRU2 is completed.

S1005: performing channel compensation to the RRU0 after the RRU1 transmits the second compensation coefficient' to the RRU0, and the RRU0 acquires a first transmitting correction coefficient' or a first receiving correction coefficient' or a first transceiving joint correction coefficient' by updating the first transmitting correction coefficient or the first receiving correction coefficient or the first transceiving joint correction coefficient according to the second compensation coefficient'. That is, the joint channel correction among three RRUs is completed. Alternatively, performing channel compensation to the RRU0 after the RRU2 transmits the third compensation coefficient' to the RRU0, and the RRU0 updates the first transmitting correction coefficient' or the first receiving correction coefficient' or the first transceiving joint correction coefficient' according to the third compensation coefficient'. That is, the joint channel correction among three RRUs is completed.

Details are described hereunder by taking an example that the first transmitting correction coefficient is acquired by the RRU0 according to the second compensation coefficient' :

A first transmitting correction coefficient' ' acquired by the RRU0 by updating the first transmitting correction coefficient is:

$$\tilde{\tilde{\beta}}_{0,i}^{\mathrm{DL}}(n) = \mu_1'(n)\tilde{\beta}_{0,i}^{\mathrm{DL}}(n)$$

$$= \mu_1'(n)\mu_0(n)\beta_{0,i}^{\mathrm{DL}}(n)$$

$$= \frac{h_{Air,02}h_{Air,12}}{h_2^{cr}h_0^{cr}h_2^{ct}h_1^{ct}}\frac{h_{Air,01}(n)}{h_1^{cr}(n)h_0^{ct}(n)}\frac{1}{h_0^{cr}(n)h_{0,i}^{t}(n)}$$

$$\tilde{\beta}_{0,i}^{\mathrm{DL}}(n) = \mu_0(n)\beta_{0,i}^{\mathrm{DL}}(n)$$

A first receiving correction coefficient' ' acquired by updating the first receiving correction coefficient' is:

$$\tilde{\tilde{\beta}}_{0,i}^{\mathrm{UL}}(n) = \tilde{\beta}_{0,i}^{\mathrm{UL}}(n)$$

After the compensation:

$$\frac{\tilde{\tilde{\beta}}_{0,0}^{\mathrm{UL}}(n)h_{0,0}^{r}(n)}{\tilde{\beta}_{0,0}^{\mathrm{DL}}(n)h_{0,0}^{t}(n)} = \frac{\tilde{\tilde{\beta}}_{0,1}^{\mathrm{UL}}(n)h_{0,1}^{r}(n)}{\tilde{\beta}_{0,1}^{\mathrm{DL}}(n)h_{0,1}^{t}(n)} = \cdots = \frac{\tilde{\tilde{\beta}}_{0,N_{\mathrm{ANT}}-1}^{\mathrm{UL}}(n)h_{1,N_{\mathrm{ANT}}-1}^{r}(n)}{\tilde{\beta}_{0,N_{\mathrm{ANT}}-1}^{\mathrm{DL}}(n)h_{1,N_{\mathrm{ANT}}-1}^{t}(n)}$$

$$= \frac{\left(h_0^{cr}(n)\right)^2 h_1^{ct}(n)h_2^{ct}(n)h_1^{cr}(n)h_2^{cr}(n)}{h_{Air,01}(n)h_{Air,02}h_{Air,12}}$$

Apparently, equations of the compensated RRU0, the RRU1 and the RRU2 are the same, indicating that the joint channel correction among three RRUs is completed.

Embodiment 6

As shown in FIG. 11, Embodiment 6 provides a correction apparatus, which is used for joint channel correction among multiple RRUs in a communication system, the communication system at least includes a first RRU and a second RRU, where the correction apparatus includes:

> a self-corrector, configured to perform a self-correction to the first RRU and the second RRU respectively, and acquire a first self-correction coefficient and a second self-correction coefficient respectively;
> a first controller, configured to transmit a first correction signal to a second antenna of the second RRU through a first antenna of the first RRU, and receive the first correction signal through the second antenna;
> a second controller, configured to transmit a second correction signal to the first antenna through the second antenna, receive the second correction signal through the first antenna, and acquire a first compensation coefficient;
> a processor, configured to acquire a second compensation coefficient after the second antenna receives the first correction signal; acquire a first compensation coefficient after the first antenna receives the second correction signal; and acquire a first correction coefficient according to the first compensation coefficient and the first self-correction coefficient, and acquire a second correction coefficient according to the second compensation coefficient and the second self-correction coefficient.

Alternatively, the first self-correction coefficient includes a first transmitting self-correction coefficient and a first receiving self-correction coefficient, the second self-correction coefficient includes a second transmitting self-correction coefficient and a second receiving self-correction coefficient; the first correction coefficient includes a first transmitting correction coefficient and a first receiving correction coefficient, the second correction coefficient includes a second transmitting correction coefficient and a second receiving correction coefficient.

Alternatively, the correction apparatus also includes a compensator, the compensator is configured to perform channel compensation to the first RRU according to the first correction coefficient, and perform channel compensation to the second RRU according to the second correction coefficient.

Alternatively, the first antenna and the second antenna are any antenna of the first RRU and the second RRU respectively; or

the first antenna and the second antenna are an antenna reaching a threshold of received signal strength or signal quality of the first RRU and the second RRU respectively; or

perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways:

digital weighting, intermediate frequency weighting, radio frequency phase shift and physical movement.

Alternatively, the correction apparatus also includes a first transmitter, the transmitter is configured to transmit the first transmitting self-correction coefficient to the second RRU before the second compensation coefficient is acquired; and transmit the second receiving self-correction coefficient to the first RRU before the first compensation coefficient is acquired.

Alternatively, the self-corrector is further configured to perform a self-correction to the third RRU included in the communication system, and acquire a third self-correction coefficient;

the correction apparatus also includes a second transmitter, the second transmitter is configured to transmit the first compensation coefficient to the third RRU after the first compensation coefficient is acquired;

the processor is further configured to acquire a third correction coefficient according to the first compensation coefficient and the third self-correction coefficient.

Embodiments of the present invention are described in a progressive way, each embodiment only emphasizes contents which it is different from other embodiments, for the same or similar part among embodiments, reference may be made to each other.

Embodiment 7

This embodiment is mainly the same as Embodiment 1, the difference lies in that:

An executive agent of this embodiment is
In S301, the transceiving joint self-correction coefficient may also be indicated as a ratio of a receiving self-correction coefficient to a transmitting self-correction coefficient.

In S302, when selecting an antenna, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways: digital weighting, intermediate frequency weighting, radio frequency phase shift and physical movement.

The correction signal may also be various training sequences or reference signal sequences used in institute of electrical and electronic engineers (Institute of Electrical And Electronic Engineers, IEEE) 802 series protocol.

In S304, after acquiring a correction coefficient, it also needs to update the correction coefficient: select a service channel from service channels of the RRU0 or the RRU1 as a reference channel, and divide correction coefficients of all service channels of the RRU0 and the RRU1 by correction coefficients of the reference channel respectively, so that all RRUs are aligned to a specific service channel finally. For example, if a service channel 0 of the RRU0 is selected as the reference channel, then divide transmitting correction coefficients and receiving correction coefficients of all service channels of the RRU0 and the RRU1 by transmitting correction coefficients and receiving correction coefficients of the service channel 0 of the RRU0.

After acquiring the correction coefficient, channel compensation can be performed subsequently according to the correction coefficient. For example, during a normal service communication, as for the RRU0, a transmitting and a receiving signal of each service channel may be multiplied by a first transmitting correction coefficient and a first receiving correction coefficient of each service channel respectively, or the receiving signal of each service channel may be multiplied by a first transceiving joint correction coefficient of each service channel, or the transmitting signal of each service channel may be multiplied by an reciprocal of the first transceiving joint correction coefficient of each service channel; as for the RRU1, a transmitting and a receiving signal of each service channel may be multiplied by a second transmitting correction coefficient and a second receiving correction coefficient of each service channel respectively, or the receiving signal of each service channel may be multiplied by a second transceiving joint correction coefficient of each service channel, or the transmitting signal of each service channel may be multiplied by an reciprocal of the second transceiving joint correction coefficient of each service channel. As above, the joint channel correction among multiple RRUs can be completed finally. It should be noted that, if the correction coefficient is updated, then the channel compensation is performed according to the updated correction coefficient.

Embodiment 8

This embodiment is the same as Embodiment 2 approximately, the difference lies in that:
In S502, when selecting an antenna, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways: digital weighting, intermediate frequency weighting, radio frequency phase shift and physical movement.

In S503, before calculating a compensation coefficient, transmit the first transmitting self-correction coefficient $\beta_{0,0}^{\mathrm{DL}}$ of the service channel 0 acquired during the self-correction of the RRU0 in S501 to the RRU1 via X2 interfaces or private communication interfaces between a base station system corresponding to the RRU0 and a base station system corresponding to the RRU1, and then multiply $\gamma_{1,0}(n)$, $\beta_{0,0}^{\mathrm{DL}}$ and $\beta_{1,0}^{\mathrm{UL}}$ and take product as the second compensation coefficient $\mu_1(n)$ according to the second receiving self-correction coefficient $\beta_{1,0}^{\mathrm{UL}} = \dfrac{1}{h_{1,0}^{r}(n) h_{1}^{ct}(n)}$, n=0,1,...,N-1 of the service channel 0 acquired during the self-correction of the RRU1 in S501:

$$\mu_1(n) = \gamma_{1,0}(n) \beta_{0,0}^{\mathrm{DL}} \beta_{1,0}^{\mathrm{UL}} = h_{1,0}^{r}(n) h_{Air}(n) h_{0,0}^{t}(n) \cdot \frac{1}{h_{0,0}^{t}(n) h_{0}^{cr}(n)} \cdot \frac{1}{h_{1,0}^{r}(n) h_{1}^{ct}(n)} = \frac{h_{Air}(n)}{h_{1}^{ct}(n) h_{0}^{cr}(n)}$$

, n=0,1,…,N-1

Alternatively, when the RRU1 does not perform a channel estimation after receiving the correction signal:

$$\mu_1(n) = \gamma_{1,0}(n) \beta_{0,0}^{\mathrm{DL}} \beta_{1,0}^{\mathrm{UL}} = h_{1,0}^{r}(n) h_{Air}(n) h_{0,0}^{t}(n) s(n) \cdot \frac{1}{h_{0,0}^{t}(n) h_{0}^{cr}(n)} \cdot \frac{1}{h_{1,0}^{r}(n) h_{1}^{ct}(n)} = \frac{h_{Air}(n) s(n)}{h_{1}^{ct}(n) h_{0}^{cr}(n)}$$

, n=0,1,…,N-1

Transmit the second transmitting self-correction coefficient $\beta_{1,0}^{\mathrm{DL}} = \dfrac{1}{h_{1,0}^{t}(n) h_{1}^{cr}(n)}$, n=0,1,...,N-1 of the service channel 0 acquired during the self-correction of the RRU1 in step 501 to the RRU0 via X2 interfaces or private communication interfaces between a base station system corresponding to the RRU0 and a base station system corresponding to the RRU1, and then multiply $\gamma_{0,0}(n)$, $\beta_{1,0}^{\mathrm{DL}}$ and $\beta_{0,0}^{\mathrm{UL}}$ and take product as the first compensation coefficient $\mu_0(n)$ according to the first receiving self-correction coefficient $\beta_{0,0}^{\mathrm{UL}} = \dfrac{1}{h_{0,0}^{r}(n) h_{0}^{ct}(n)}$, n=0,1,...,N-1 of the service channel 0 acquired during the self-correction of the RRU0 in step 501:

$$\mu_0(n) = \gamma_{0,0}(n)\beta_{0,0}^{\mathrm{UL}}\beta_{1,0}^{\mathrm{DL}} = h_{0,0}^r(n)h_{Air}(n)h_{1,0}^t(n) \cdot \frac{1}{h_{0,0}^r(n)h_0^{ct}(n)} \cdot \frac{1}{h_{1,0}^t(n)h_1^{cr}(n)} = \frac{h_{Air}(n)}{h_0^{ct}(n)h_1^{cr}(n)} \;,\; n=0,1,\dots,N-1$$

Alternatively, when the RRU0 does not perform a channel estimation after receiving the correction signal:

$$\mu_0(n) = \gamma_{0,0}(n)\beta_{0,0}^{\mathrm{UL}}\beta_{1,0}^{\mathrm{DL}} = h_{0,0}^r(n)h_{Air}(n)h_{1,0}^t(n)s(n) \cdot \frac{1}{h_{0,0}^r(n)h_0^{ct}(n)} \cdot \frac{1}{h_{1,0}^t(n)h_1^{cr}(n)} = \frac{h_{Air}(n)s(n)}{h_0^{ct}(n)h_1^{cr}(n)}$$

$$, n=0,1,\dots,N-1$$

In S504, after acquiring a correction coefficient, it also needs to update the correction coefficient: select a service channel from service channels of the RRU0 or the RRU1 as a reference channel, and divide correction coefficients of all service channels of the RRU0 and the RRU1 by correction coefficients of the reference channel respectively, so that all RRUs are aligned to a specific service channel finally. For example, if a service channel 0 of the RRU0 is selected as the reference channel, then divide transmitting correction coefficients and receiving correction coefficients of all service channels of the RRU0 and the RRU1 by transmitting correction coefficients and receiving correction coefficients of the service channel 0 of the RRU0.

After acquiring the correction coefficient, channel compensation can be performed subsequently according to the correction coefficient. For example, during a normal service communication, as for the RRU0, a transmitting and a receiving signal of each service channel may be multiplied by a first transmitting correction coefficient and a first receiving correction coefficient of each service channel respectively, or the receiving signal of each service channel may be multiplied by a first transceiving joint correction coefficient of each service channel, or the transmitting signal of each service channel may be multiplied by an reciprocal of the first transceiving joint correction coefficient of each service channel; as for the RRU1, a transmitting and a receiving signal of each service channel may be multiplied by a second transmitting correction coefficient and a second receiving correction coefficient of each service channel respectively, or the receiving signal of each service channel may be multiplied by a second transceiving joint correction coefficient of each service channel, or the transmitting signal of each service channel may be multiplied by an reciprocal of the second transceiving joint correction coefficient of each service channel. As above, the joint channel correction among multiple RRUs can be finished completed. It should be noted that, if the correction coefficient is updated, then the channel compensation is performed according to the updated correction coefficient.

Embodiment 9

This embodiment is mainly the same as Embodiment 3, the difference lies in that:
In this embodiment, when selecting an antenna, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways: digital weighting, intermediate frequency weighting, radio frequency phase shift and physical movement.

In S703, the correction signal may also be various training sequences or reference signal sequences used in institute of electrical and electronic engineers (Institute of Electrical and Electronic Engineers, IEEE) 802 series protocol.

In S704, when calculate a compensation coefficient: the RRU2 selects an antenna 0 corresponding to a service channel 0 as the third antenna, thus, according to the third receiving self-correction coefficient

$$\beta_{2,0}^{\mathrm{UL}} = \frac{1}{h_{2,0}^r(n)h_2^{ct}(n)} \;,$$

n=0,1,...,N-1 of the service channel 0 acquired during the self-correction of the RRU2 in step 701, multiply $\gamma_{2,0}(n)$ and $\beta_{2,0}^{\mathrm{UL}}$ and take product as the third compensation coefficient $\upsilon_2(n)$:

$$\upsilon_2(n) = \frac{h_{Air,0,1}(n)\,h_{Air,12}(n)}{h_1^{ct}(n)\,h_0^{cr}(n)\,h_1^{cr}(n)\,h_2^{ct}(n)}, \ n=0,1,\dots,N-1$$

Alternatively, when the RRU2 does not perform a channel estimation after receiving the correction signal:

$$\upsilon_2(n) = \frac{h_{Air,0,1}(n)\,h_{Air,12}(n)}{h_1^{ct}(n)\,h_0^{cr}(n)\,h_1^{cr}(n)\,h_2^{ct}(n)} \cdot s(n), \ n=0,1,\dots,N-1$$

In this embodiment, the RRU1 selects an antenna 0 corresponding to a service channel 0 as the second antenna, thus, according to the second receiving self-correction coefficient $\beta_{1,0}^{\mathrm{UL}} = \dfrac{1}{h_{1,0}^{r}(n)\,h_1^{ct}(n)}$, $n=0,1,\dots,N-1$ of the service channel 0 acquired during the self-correction of the RRU1 in step 701, multiply $\gamma'_{1,0}(n)$ and $\beta_{1,0}^{\mathrm{UL}}$ and take product as the second compensation coefficient' $\upsilon_1(n)$:

$$\upsilon_1(n) = \frac{h_{Air,12}(n)}{h_1^{ct}(n)\,h_2^{cr}(n)}, \ n=0,1,\dots,N-1$$

Alternatively, when the RRU1 does not perform a channel estimation after receiving the correction signal:

$$\upsilon_1(n) = \frac{h_{Air,12}(n)}{h_1^{ct}(n)\,h_2^{cr}(n)} \cdot s(n), \ n=0,1,\dots,N-1$$

In S705, the second correction coefficient' is acquired according to the second compensation coefficient' and the second correction coefficient, the third correction coefficient is acquired according to the third compensation and the third self-correction coefficient, that is, multiply the second compensation coefficient' $\upsilon_1(n)$ and the second transmitting correction coefficient and take product as the second transmitting correction coefficient' $\tilde{\beta}_{1,i}^{\prime\mathrm{DL}}(n) = \upsilon_1(n)\,\tilde{\beta}_{1,i}^{\mathrm{DL}}(n)$; multiply the third compensation coefficient $\upsilon_2(n)$ and the third transmitting self-correction coefficient and take product as the third transmitting correction coefficient $\tilde{\beta}_{2,i}^{\prime\mathrm{DL}}(n) = \upsilon_2(n)\,\beta_{2,i}^{\mathrm{DL}}(n)$. When transmit the second compensation coefficient' $\upsilon_1(n)$ to a cell 0 where the RRU0 locates via a cell where the RRU1 locates, X2 interfaces or private communication interfaces between cells may be used for the transmission.

In this embodiment, after acquiring a correction coefficient in S705, it also needs to update the correction coefficient: select a service channel from service channels of the RRU0, the RRU1 or the RRU2 as a reference channel, and divide correction coefficients of all service channels of the RRU0, the RRU1 and the RRU2 by correction coefficients of the reference channel respectively, so that all RRUs are aligned to a specific service channel finally. For example, if a service channel 0 of the RRU0 is selected as the reference channel, then divide transmitting correction coefficients and receiving correction coefficients of all service channels of the RRU0, the RRU1 and the RRU2 by transmitting correction coefficients and receiving correction coefficients of the service channel 0 of the RRU0.

After acquiring the correction coefficient, channel compensation can be performed subsequently according to the correction coefficient. For example, during a normal service communication, as for the RRU0, the RRU1, the RRU2, a transmitting and a receiving signal of each service channel may be multiplied by a first transmitting correction coefficient and a first receiving correction coefficient of each service channel respectively, or the receiving signal of each service channel may be multiplied by a first transceiving joint correction coefficient of each service channel, or the transmitting signal of each service channel may be multiplied by an reciprocal of the first transceiving joint correction coefficient of each service channel. As above, the joint channel correction among multiple RRUs can be completed finally. It should be noted that, if the correction coefficient is updated, then the channel compensation is performed according to the updated correction coefficient.

Embodiment 10

This embodiment is mainly the same as Embodiment 5, the difference lies in that:
In this embodiment, when selecting an antenna, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways: digital weighting, intermediate frequency weighting, radio frequency phase shift and physical movement.

After acquiring a correction coefficient in S1005, it also needs to update the correction coefficient: select a service channel from service channels of the RRU0, the RRU1 or the RRU2 as a reference channel, and divide correction coefficients of all service channels of the RRU0, the RRU1 and the RRU2 by correction coefficients of the reference channel respectively, so that all RRUs are aligned to a specific service channel finally. For example, if a service channel 0 of the RRU0 is selected as the reference channel, then divide transmitting correction coefficients and receiving correction coefficients of all service channels of the RRU0, the RRU1 and the RRU2 by transmitting correction coefficients and receiving correction coefficients of the service channel 0 of the RRU0.

After acquiring the correction coefficient, channel compensation can be performed subsequently according to the correction coefficient. For example, during a normal service communication, as for the RRU0, the RRU1, a transmitting and a receiving signal of each service channel may be multiplied by a first transmitting correction coefficient and a first receiving correction coefficient of each service channel respectively, or the receiving signal of each service channel may be multiplied by a first transceiving joint correction coefficient of each service channel, or the transmitting signal of each service channel may be multiplied by an reciprocal of the first transceiving joint correction coefficient of each service channel. As above, the joint channel correction among multiple RRUs can be completed finally. It should be noted that, if the correction coefficient is updated, then the channel compensation is performed according to the updated correction coefficient.

Embodiment 11

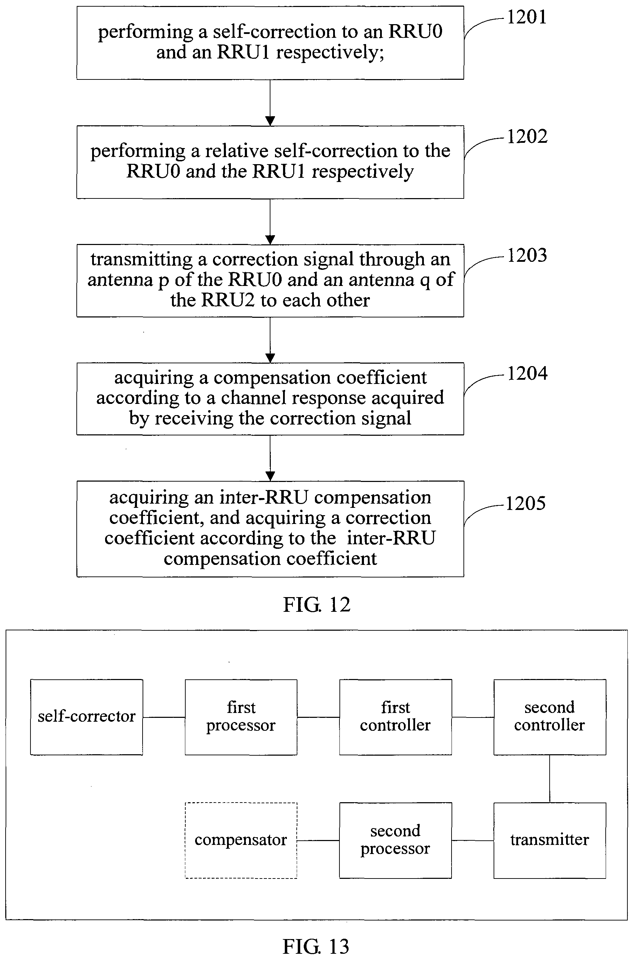

Embodiment 11 is described by taking an example of joint channel correction between two RRUs where each RRU includes 4 antennas (the actual number of antennas can be any integer). FIG. 12 is a schematic flow chart of a method for joint channel correction among multiple RRUs provided by Embodiment 6, as shown in FIG. 12, the method include:

S1201: performing a self-correction to an RRU0 and an RRU1 respectively;

In this embodiment, the RRU0 and the RRU1 are a first RRU and a second RRU respectively, and this step is the same as S301 in Embodiment 1.

S1202: performing a relative self-correction to the RRU0 and the RRU1 respectively;

Select a service channel from service channels of the RRU0 and the RRU1 as a reference channel respectively, and divide self-correction coefficients of all service channels of the RRU0 and the RRU1 by self-correction coefficients of respective reference channels respectively; for example, if the RRU0 selects service channel p of RRU0 as a reference channel and the RRU1 selects a service channel q as a reference channel, then divide self-correction coefficients of all service channels of the RRU0 by self-correction coefficients of the service channel p and divide self-correction coefficients of all service channels of the RRU1 by self-correction coefficients of the service channel q, and then an updated first receiving self-correction coefficient is: $\beta_{0,i}^{\mathrm{UL}}(n) = \dfrac{\beta_{0,i}^{\mathrm{UL}}(n)}{\beta_{0,p}^{\mathrm{UL}}(n)} = \dfrac{h_{0,p}^{r}(n)}{h_{0,i}^{r}(n)},\ k=0,1,\ \beta_{0,p}^{\mathrm{UL}}(n)=1;$ an updated first

$$\beta_{0,i}^{DL}(n) = \frac{\beta_{0,i}^{DL}(n)}{\beta_{0,q}^{DL}(n)} = \frac{h_{0,p}^{t}(n)}{h_{0,i}^{t}(n)},$$

transmitting self-correction coefficient is: $k = 0,1,$ $\beta_{0,p}^{DL}(n) = 1$ ; an updated

$$\beta_{0,i}(n) = \frac{\beta_{0,i}(n)}{\beta_{0,p}(n)},$$

first transceiving joint self-correction coefficient is: $\beta_{0,p}(n) = 1$; an updated second receiving

$$\beta_{1,i}^{UL}(n) = \frac{\beta_{1,i}^{UL}(n)}{\beta_{1,q}^{UL}(n)} = \frac{h_{1,q}^{r}(n)}{h_{1,i}^{r}(n)},$$

self-correction coefficient is: $k=0,1,$ $\beta_{1,q}^{UL}(n) = 1$ ; an updated second trans-

$$\beta_{1,i}^{DL}(n) = \frac{\beta_{1,i}^{DL}(n)}{\beta_{1,q}^{DL}(n)} = \frac{h_{1,q}^{t}(n)}{h_{1,i}^{t}(n)},$$

mitting self-correction coefficient is: $k = 0,1,$ $\beta_{1,q}^{DL}(n) = 1$; an updated second

$$\beta_{1,i}(n) = \frac{\beta_{1,i}(n)}{\beta_{1,q}(n)}$$

transceiving joint self-correction coefficient is: , $\beta_{1,q}(n) = 1$.

After completing the self-correction, the RRU0 may be expressed as the following formula:

$$\frac{\beta_{0,0}^{UL}(n)h_{0,0}^{r}(n)}{\beta_{0,0}^{DL}(n)h_{0,0}^{t}(n)} = \frac{\beta_{0,1}^{UL}(n)h_{0,1}^{r}(n)}{\beta_{0,1}^{DL}(n)h_{0,1}^{t}(n)} = \cdots = \frac{\beta_{0,N_{ANT}-1}^{UL}(n)h_{0,N_{ANT}-1}^{r}(n)}{\beta_{0,N_{ANT}-1}^{DL}(n)h_{0,N_{ANT}-1}^{t}(n)} = \frac{h_{0,p}^{r}(n)}{h_{0,p}^{t}(n)}.$$

After completing the self-correction, the RRU1 may be expressed as the following formula:

$$\frac{\beta_{1,0}^{UL}(n)h_{1,0}^{r}(n)}{\beta_{1,0}^{DL}(n)h_{1,0}^{t}(n)} = \frac{\beta_{1,1}^{UL}(n)h_{1,1}^{r}(n)}{\beta_{1,1}^{DL}(n)h_{1,1}^{t}(n)} = \cdots = \frac{\beta_{1,N_{ANT}-1}^{UL}(n)h_{1,N_{ANT}-1}^{r}(n)}{\beta_{1,N_{ANT}-1}^{DL}(n)h_{1,N_{ANT}-1}^{t}(n)} = \frac{h_{1,q}^{r}(n)}{h_{1,q}^{t}(n)}.$$

S1203: transmitting a first correction signal through an antenna p corresponding to the service channel p of the RRU0, and receiving the first correction signal through an antenna q corresponding to the service channel q of the RRU1; transmitting a second correction signal through the antenna q of the RRU1, and receiving the second correction signal through the antenna p of the RRU0;

Take p=q=0 as an example, the transmitted correction signal is: $\beta_{0,0}^{DL}(n)s(n)$ , $n=0,1,\cdots,N-1$.

The first correction signal received by the $n^{th}$ subcarrier of an antenna 0 of the RRU1 is:

$$\tilde{r}_{1,0}(n) = h_{1,0}^{r}(n) \cdot h_{Air,10}(n) \cdot h_{0,0}^{t}(n) \cdot s(n), n=0,1,\ldots,N-1$$

After receiving the first correction signal, the RRU1 performs a channel estimation according to the reference sequence S, then a second channel response estimated by the $n^{th}$ subcarrier is:

$$\gamma_{1,0}(n) = h_{1,0}^{r}(n) \cdot h_{Air,10}(n) \cdot h_{0,0}^{t}(n), n=0,1,\ldots,N-1$$

Likewise, the RRU0, after receiving the second correction signal, performs a channel estimation according to the reference sequence S, then a first channel response estimated by the $n^{th}$ subcarrier is:

$$\gamma_{0,0}(n) = h_{0,0}^{r}(n) \cdot h_{Air,01}(n) \cdot h_{1,0}^{t}(n), n=0,1,\ldots,N-1$$

S1204: acquiring a first compensation coefficient and a second compensation coefficient according to the first channel response and the second channel response. The compensation coefficients are used to acquire correction coefficients after correcting the self-correction coefficients, so that uplink-downlink ratios of different RRUs are the same;

The second compensation coefficient is:

$$\mu_1(n) = \gamma_{1,0}(n) = h_{1,0}^r(n) \cdot h_{Air,10}(n) \cdot h_{0,0}^t(n), \text{ n=0,1,\ldots,N-1}$$

The first compensation coefficient is:

$$\mu_0(n) = \gamma_{0,0}(n) = h_{0,0}^r(n) \cdot h_{Air,01}(n) \cdot h_{1,0}^t(n), \text{ n=0,1,\ldots,N-1}$$

S1205: acquiring an inter-RRU compensation coefficient of the RRU1 by taking the RRU0 as a reference, acquiring a second receiving correction coefficient by multiplying the updated second receiving self-correction coefficient of the RRU1 by the inter-RRU compensation coefficient, where the updated second transmitting correction coefficient equals to the second transmitting self-correction coefficient, or acquiring a second transmitting correction coefficient by dividing the updated second transmitting self-correction coefficient of the RRU1 by the inter-RRU compensation coefficient, where the updated second receiving correction coefficient equals to the second receiving self-correction coefficient, or acquiring a second transceiving joint correction coefficient by multiplying the updated second transceiving joint self-correction coefficient of the RRU1 by the inter-RRU compensation coefficient, where the first correction coefficient or the first transceiving joint correction coefficient of the RRU0 equals to the updated first self-correction coefficient or the updated first transceiving joint self-correction coefficient.

Take the RRU0 as a reference, the inter-RRU compensation coefficient is:

$$\mu(n) = \frac{\mu_0(n)}{\mu_1(n)}$$

Since $\mu_0(n)$ needs to be transmitted to a BBU corresponding to the RRU1 from a BBU corresponding to the RRU0 via private communication interfaces or standard protocol interfaces such as X2 interfaces in a LTE system, in order to reduce transmission overhead, interactions of time domain tap information of channel estimation values $\gamma_{0,0}(n)$ ($\mu_0(n) = \gamma_{0,0}(n)$) can be considered, or a manner that tap 1 every N (N>1) in frequency domain can be adopted, to reduce transmission overhead to 1/N.

After acquiring the correction coefficient, channel compensation can be performed subsequently according to the correction coefficient. For example, during a normal service communication, as for the RRU0 and the RRU1, a transmitting and a receiving signal of each service channel may be multiplied by a first transmitting correction coefficient and a first receiving correction coefficient of each service channel respectively, or the receiving signal of each service channel may be multiplied by a first transceiving joint correction coefficient of each service channel, or the transmitting signal of each service channel may be multiplied by an reciprocal of the first transceiving joint correction coefficient of each service channel. As above, the joint channel correction among multiple RRUs can be completed finally. It should be noted that, if the correction coefficient is updated, then the channel compensation is performed according to the updated correction coefficient.

The solution is extended to k RRUs, when k≥3, corrections between each of other RRUs and a reference RRU, such as an RRU0, are performed, for example, assuming that there is 3 RRUs, an RRU0, an RRU1 and an RRU2, the RRU0 and the RRU1 use operations as similar as the above embodiments to acquire a correction coefficient of the RRU1, the RRU0 and the RRU2 also use operations as similar as the above embodiments to acquire a correction coefficient of the RRU2, and so forth.

Embodiment 12

As shown in FIG. 11, this embodiment provides a correction apparatus, the correction apparatus can be used to implement the method for joint channel correction between RRUs in Embodiment 1, as an example, the RRU0 and the RRU1 are a first RRU and a second RRU respectively, and the correction apparatus includes:

a self-corrector, configured to perform a self-correction to the first RRU and the second RRU respectively, and acquire a first self-correction coefficient and a second self-correction coefficient respectively; transmit the first self-correction coefficient and the second self-correction coefficient to a processor;

a first controller, configured to transmit a first correction signal to a second antenna of the second RRU through a first antenna of the first RRU, and receive the first correction signal through the second antenna;

a second controller, configured to transmit a second correction signal to the first antenna through the second antenna, and receive the second correction signal through the first antenna;

a processor, configured to acquire a second compensation coefficient according to a channel response produced by receiving the first correction signal after the second antenna receives the first correction signal; acquire a first compensation coefficient according to a channel response produced by receiving the second correction signal after the first antenna receives the second correction signal; and acquire a first correction coefficient according to the first compensation coefficient and the first self-correction coefficient, acquire a second correction coefficient according to the second compensation coefficient and the second self-correction coefficient; transmit the first correction coefficient and the second correction coefficient to a compensator;

Alternatively, the correction apparatus also includes a compensator, configured to perform channel compensation to the first RRU according to the first correction coefficient, and perform channel compensation to the second RRU according to the second correction coefficient.

Alternatively, the first self-correction coefficient includes a first transmitting self-correction coefficient and a first receiving self-correction coefficient of each service channel of the first RRU, the second self-correction coefficient includes a second transmitting self-correction coefficient and a second receiving self-correction coefficient of each service channel of the second RRU; the first correction coefficient includes a first transmitting correction coefficient and a first receiving correction coefficient of each service channel of the first RRU, the second correction coefficient includes a second transmitting correction coefficient and a second receiving correction coefficient of each service channel of the second RRU.

Alternatively, when selecting an antenna, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment includes any one or any combination of the following ways: digital weighting, intermediate frequency weighting, radio frequency phase shift and physical movement.

Alternatively, the correction apparatus also includes a first transmitter, the transmitter is configured to transmit the first transmitting self-correction coefficient of a service channel corresponding to the first antenna to the second RRU before acquiring the second compensation coefficient; and transmit the second transmitting self-correction coefficient of a service channel corresponding to the second antenna to the first RRU before acquiring the first compensation coefficient.

Alternatively, the communication system also includes a third RRU, the self-corrector is also configured to perform a self-correction to the third RRU included in the communication system, and acquire a third self-correction coefficient; the second controller is also configured to transmit a second correction signal' to a third antenna of the third RRU through the second antenna of the second RRU, and receive the second correction signal' through the third antenna; the correction apparatus also includes a third controller, configured to transmit a third correction signal to the second antenna of the second RRU through the third antenna of the third RRU, and receive the third correction signal through the second antenna; the correction apparatus also includes a second transmitter, the second transmitter is configured to transmit the second compensation coefficient' to the first RRU; the processor is also configured to acquire a third compensation coefficient according to a third channel response acquired by receiving the second correction signal' ; acquire a second compensation coefficient' according to a second channel response' acquired by receiving the third correction signal; acquire a first correction coefficient' according to the second compensation coefficient' and the first correction coefficient; acquire a second correction coefficient' according to the second compensation coefficient' and the second correction coefficient; acquire a third correction coefficient according to the third compensation coefficient and the third self-correction coefficient. At this time, the correction apparatus can be used to implement the method for joint channel correction between RRUs in Embodiment 3 or Embodiment 4.

Alternatively, the processor in the correction apparatus is also configured to select a service channel from service channels of the first RRU or the second RRU as a reference channel, and divide correction coefficients of all service channels of the first RRU and the second RRU by correction coefficients of the reference channel respectively, so that all RRUs are aligned to the reference channel.

Embodiment 13

As shown in FIG. 13, Embodiment 8 provides a correction apparatus, the correction apparatus can be used to implement the method for joint channel correction between RRUs in Embodiment 1, as an example, the RRUO and the RRU1 are a first RRU and a second RRU respectively, and the correction apparatus includes:

a self-corrector, configured to perform a self-correction to the first RRU and the second RRU respectively, and acquire first self-correction coefficients of all service channels of the first RRU and second self-correction coefficients of all service channels of the second RRU respectively; transmit the first self-correction coefficients and the second self-correction coefficients to a processor;

a first processor, configured to select a service channel from service channels of the first RRU or the second RRU as a reference channel, and divide self-correction coefficients of all service channels of the first RRU and the second RRU by self-correction coefficients of respective reference channels respectively, so that both the first RRU and the second RRU are aligned to respective reference channels respectively; acquire updated first self-correction coefficients and second self-correction coefficients;

a first controller, configured to transmit a first correction signal to a second antenna corresponding to a reference channel of the second RRU through a first antenna corresponding to a reference channel of the first RRU, and receive the first correction signal through the second antenna;

a second controller, configured to transmit a second correction signal to the first antenna through the second antenna, and receive the second correction signal through the first antenna;

a transmitter, configured to transmit the first compensation coefficient to the second RRU;

a second processor, configured to acquire a second compensation coefficient according to a second channel response acquired by receiving the first correction signal; acquire a first compensation coefficient according to a first channel response acquired by receiving the second correction signal; acquire an inter-RRU compensation coefficient according to a ratio of the first compensation coefficient to the second compensation coefficient; acquire second correction coefficients of all service channels of the second RRU according to the inter-RRU compensation coefficient and the updated second self-correction coefficients of all service channels of the second RRU, and take the updated first self-correction coefficients of all service channels of the first RRU as first correction coefficients of all service channels of the first RRU.

Alternatively, the first self-correction coefficient includes a first transmitting self-correction coefficient and a first receiving self-correction coefficient of each service channel of the first RRU, the second self-correction coefficient includes a second transmitting self-correction coefficient and a second receiving self-correction coefficient of each service channel of the second RRU; the first correction coefficient includes a first transmitting correction coefficient and a first receiving correction coefficient of each service channel of the first RRU, the second correction coefficient includes a second transmitting correction coefficient and a second receiving correction coefficient of each service channel of the second RRU.

Alternatively, the correction apparatus also includes a compensator, configured to perform channel compensation to the first RRU according to the first correction coefficients, and perform channel compensation to the second RRU according to the second correction coefficients.

Steps of a method or an algorithm described in connection with the embodiments disclosed herein may be embodied directly in hardware, in a software module executed by a processor, or in a combination of both. A software module may reside in random access memory (RAM), internal storage, read-only memory (ROM), electrically programmable ROM, electrically-erasable programmable ROM, registers, hard disk, a mobile disk, a CD-ROM, or any other form of storage medium known in the art.

The previous description of the disclosed embodiments is provided to enable any person skilled in the art to implement or use the present invention. Various modifications to these embodiments will be readily apparent to those skilled in the art, and the general principles defined herein may be applied to other embodiments without departing from the scope of the present invention. Thus, the present invention is not intended to be limited to the embodiments shown herein but is to be accorded the widest scope consistent with the principles and novel features disclosed herein.

Further embodiments of the present invention are provided in the following. It should be noted that the numbering used in the following section does not necessarily need to comply with the numbering used in the previous sections.

Example 1. A method for joint channel correction among multiple radio remote units RRUs, which is used for joint channel correction among multiple RRUs in a communication system, the communication system at least comprises a first RRU and a second RRU, wherein the method comprises:

performing a self-correction to the first RRU and the second RRU respectively, and acquiring a first self-correction coefficient and a second self-correction coefficient respectively;

transmitting a first correction signal to a second antenna of the second RRU through a first antenna of the first RRU, and receiving the first correction signal through the second antenna, and acquiring a second compensation coefficient according to a second channel response acquired by receiving the first correction signal;

transmitting a second correction signal to the first antenna through the second antenna, and receiving the second correction signal through the first antenna, acquiring a first compensation coefficient according to a first channel response acquired by receiving the second correction signal;

acquiring a first correction coefficient according to the first compensation coefficient and the first self-correction coefficient, acquiring a second correction coefficient according to the second compensation coefficient and the second self-correction coefficient;

performing channel compensation to the first RRU according to the first correction coefficient, performing channel compensation to the second RRU according to the second correction coefficient.

Example 2. The method according to example 1, wherein, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or performing an antenna radiation direction adjustment to antennas of the first RRU and the second RRU, selecting a pair of antennas with the best received signal strength or signal quality; or performing an antenna radiation direction adjustment to antennas of the first RRU and the second RRU, selecting a pair of antennas reaching a threshold of received signal strength or signal quality; a way of performing the antenna radiation direction adjustment comprises any one or any combination of following ways: digital weighting, intermediate frequency weighting, radio frequency phase shift and physical movement.

Example 3. The method according to example 1, wherein, the first self-correction coefficient comprises a first transmitting self-correction coefficient and a first receiving self-correction coefficient of each service channel of the first RRU, the second self-correction coefficient comprises a second transmitting self-correction coefficient and a second receiving self-correction coefficient of each service channel of the second RRU; the first correction coefficient comprises a first transmitting correction coefficient and a first receiving correction coefficient of each service channel of the first RRU, the second correction coefficient comprises a second transmitting correction coefficient and a second receiving correction coefficient of each service channel of the second RRU.

Example 4. The method according to example 3, wherein, the first correction signal is product of a correction reference sequence and the first transmitting self-correction coefficient of a service channel corresponding to the first antenna; the second correction signal is product of the correction reference sequence and the second transmitting self-correction coefficient of a service channel corresponding to the second antenna.

Example 5. The method according to example 3, wherein, the first correction signal and the second correction signal are a correction reference sequence; before the acquiring the second compensation coefficient, further comprising a following step:

transmitting the first transmitting self-correction coefficient of the service channel corresponding to the first antenna to the second RRU;

before the acquiring the first compensation coefficient, further comprising a following step:

transmitting the second transmitting self-correction coefficient of the service channel corresponding to the second antenna to the first RRU.

Example 6. The method according to example 4 or 5, wherein, the correction reference sequence comprises a training sequence or a reference signal sequence used in a long term evolution LTE system, a worldwide interoperability for microwave access WiMAX system, or institute of electrical and electronic engineers IEEE 802 series protocol.

Example 7. The method according to example 4, wherein, the acquiring the second compensation coefficient comprises: multiplying the second channel response and the second receiving self-correction coefficient of the service channel corresponding to the second antenna and taking product as the second compensation coefficient;

the acquiring the first compensation coefficient comprises: multiplying the first channel response and the first receiving self-correction coefficient of the service channel corresponding to the first antenna and taking product as the first compensation coefficient.

Example 8. The method according to example 5, wherein, the acquiring the second compensation coefficient comprises: multiplying the second channel response, the first transmitting self-correction coefficient of the service channel corresponding to the first antenna, and the second receiving self-correction coefficient of the service channel corresponding to the second antenna and taking product as the second compensation coefficient;

the acquiring the first compensation coefficient comprises: multiplying the first channel response, the second transmitting self-correction coefficient of the service channel corresponding to the second antenna, and the first receiving self-correction coefficient of the service channel corresponding to the first antenna and taking product as the first compensation coefficient.

Example 9. The method according to any one of examples 3~8, wherein, the acquiring the first correction coefficient according to the first compensation coefficient and the first self-correction coefficient is specifically:

multiplying the first compensation coefficient and the first transmitting self-correction coefficient of each service channel of the first RRU and taking product as the first transmitting correction coefficient of each service channel of the first RRU; or taking a ratio of the first receiving self-correction coefficient of each service channel of the first RRU to the first compensation coefficient as the first receiving correction coefficient of each service channel of the first RRU; or taking a ratio of a first transceiving joint self-correction coefficient of each service channel of the first RRU to the first compensation coefficient as a first transceiving joint correction coefficient of each service channel of the first RRU;

the acquiring the second correction coefficient according to the second compensation coefficient and the second self-correction coefficient is specifically:

multiplying the second compensation coefficient and the second transmitting self-correction coefficient of each service channel of the second RRU and taking product as the second transmitting correction coefficient of each service channel of the second RRU; or taking a ratio of the second receiving self-correction coefficient of each service channel of the second RRU to the second compensation coefficient as the second receiving correction coefficient of each service channel of the second RRU; or taking a ratio of a second transceiving joint self-correction coefficient of each service channel of the second RRU to the second compensation coefficient as a second transceiving joint correction coefficient of each service channel of the second RRU;

the transceiving joint self-correction coefficient is a ratio of a receiving self-correction coefficient to a transmitting self-correction coefficient.

Example 10. The method according to any one of examples 1~9, wherein, after the acquiring the correction coefficients, further comprising following steps:

selecting a service channel from service channels of the first RRU or the second RRU as a reference channel, and dividing correction coefficients of all service channels of the first RRU and the second RRU by correction coefficients of the reference channel respectively, so that both the first RRU and the second RRU are aligned to the reference channel;

performing channel compensation to the first RRU and the second RRU according to an aligned correction coefficient.

Example 11. The method according to example 1, wherein, the communication system further comprises a third RRU, after the method, further comprising following steps:

performing a self-correction to the third RRU, and acquiring a third self-correction coefficient;

transmitting a second correction signal' to a third antenna of the third RRU through the second antenna of the second RRU, and receiving the second correction signal' through the third antenna, acquiring a third compensation coefficient according to a channel response acquired by receiving the second correction signal' ;

y itting a third correction signal to the second antenna of the second RRU through the third antenna of the third RRU, and receiving the third correction signal through the second antenna, acquiring a second compensation coefficient' according to a channel response acquired by receiving the third correction signal;

acquiring a second correction coefficient' according to the second compensation coefficient' and the second correction coefficient, acquiring a third correction coefficient according to the third compensation coefficient and the third self-correction coefficient;

performing channel compensation to the second RRU according to the second correction coefficient' , performing channel compensation to the third RRU according to the third correction coefficient.

Example 12. The method according to example 11, wherein, after the method, further comprising following steps: transmitting the second compensation coefficient' to the first RRU, and acquiring a first correction coefficient' according to the second compensation coefficient' and the first correction coefficient; and performing channel compensation to the first RRU according to the first correction coefficient' .

Example 13. The method according to example 12, wherein, after the method, further comprising following steps:

selecting a service channel from service channels of the first RRU, the second RRU or the third RRU as a reference channel, and dividing correction coefficients of all service channels of the first RRU, the second RRU and the third RRU by correction coefficients of the reference channel respectively, so that the first RRU, the second RRU and the third RRU are all aligned to the reference channel;

performing channel compensation to the first RRU, the second RRU and the third RRU according to an aligned correction coefficient.

Example 14. A method for joint channel correction among multiple RRUs, which is used for joint channel correction among multiple RRUs in a communication system, the communication system at least comprises a first RRU and a second RRU, wherein the method comprises:

performing a self-correction to the first RRU and the second RRU respectively, and acquiring first self-correction coefficients of all service channels of the first RRU and second self-correction coefficients of all service channels of the second RRU respectively;

selecting a service channel from service channels of the first RRU and the second RRU as a reference channel respectively, and dividing self-correction coefficients of all service channels of the first RRU and the second RRU by self-correction coefficients of respective reference channels respectively, acquiring updated first self-correction coefficients of all service channels of the first RRU and updated second self-correction coefficients of all service channels of the second RRU;

transmitting a first correction signal to a second antenna corresponding to a reference channel of the second RRU through a first antenna corresponding to a reference channel of the first RRU, and receiving the first correction signal through the second antenna, acquiring a second compensation coefficient according to a second channel response acquired by receiving the first correction signal;

transmitting a second correction signal to the first antenna through the second antenna, and receiving the second correction signal through the first antenna, acquiring a first compensation coefficient according to a first channel response acquired by receiving the second correction signal, and transmitting the first compensation coefficient to the second RRU, so that the second RRU acquires an inter-RRU compensation coefficient, and the inter-RRU compensation coefficient is a ratio of the first compensation coefficient to the second compensation coefficient;

acquiring second correction coefficients of all service channels of the second RRU according to the inter-RRU compensation coefficient and the updated second self-correction coefficients of all service channels of the second RRU, and taking the updated first self-correction coefficients of all service channels of the first RRU as first correction coefficients of all service channels of the first RRU;

performing channel compensation to the first RRU according to the first correction coefficients, performing channel compensation to the second RRU according to the second correction coefficients.

Example 15. The method according to example 14, wherein, the first self-correction coefficients include first transmitting self-correction coefficients of all service channels of the first RRU and first receiving self-correction coefficients of all service channels of the first RRU, the second self-correction coefficients comprise second transmitting self-correction coefficients of all service channels of the second RRU and second receiving self-correction coefficients of all service channels of the second RRU; the first correction coefficients comprise first transmitting correction coefficients of all service channels of the first RRU and first receiving correction coefficients of all service channels of the first RRU, the second correction coefficients comprise second transmitting correction coefficients of all service channels of the second RRU and second receiving correction coefficients of all service channels of the second RRU.

Example 16. The method according to example 14, wherein, both the first correction signal and the second correction signal are a correction reference sequence.

Example 17. The method according to example 16, wherein, the correction reference sequence comprises a training sequence or a reference signal sequence used in a long term evolution LTE system, a worldwide interoperability for microwave access WiMAX system, or institute of electrical and electronic engineers IEEE 802 series protocol.

Example 18. The method according to example 14, wherein, the acquiring the second compensation coefficient comprises: taking the second channel response as the second compensation coefficient;

the acquiring the first compensation coefficient comprises: taking the first channel response as the first compensation coefficient.

Example 19. The method according to example 15, wherein, the acquiring the second correction coefficients according to the inter-RRU compensation coefficient and the updated second self-correction coefficients of all service channels of the second RRU is specifically:

taking products of the inter-RRU compensation coefficient and the updated second receiving self-correction coefficients of all service channels of the second RRU as the second receiving correction coefficients of all service channels of the second RRU; or taking ratios of the updated second transmitting self-correction coefficients of all service channels of the second RRU to the inter-RRU compensation coefficient as the second transmitting correction coefficients of all service channels of the second RRU; or taking products of updated second transceiving joint self-correction coefficients of all service channels of the second RRU and the inter-RRU compensation coefficient as second transceiving joint correction coefficients of all service channels of the second RRU;

the updated transceiving joint self-correction coefficients are ratios of updated receiving self-correction coefficients to updated transmitting self-correction coefficients.

Example 20. A correction apparatus, which is used for joint channel correction among multiple RRUs in a communication system, the communication system at least comprises a first RRU and a second RRU, wherein the correction apparatus comprises:

a self-corrector, configured to perform a self-correction to the first RRU and the second RRU respectively, and acquire a first self-correction coefficient and a second self-correction coefficient respectively; transmit the first self-correction coefficient and the second self-correction coefficient to a processor;
a first controller, configured to transmit a first correction signal to a second antenna of the second RRU through a first antenna of the first RRU, and receive the first correction signal through the second antenna;
a second controller, configured to transmit a second correction signal to the first antenna through the second antenna, and receive the second correction signal through the first antenna;
a processor, configured to acquire a second compensation coefficient according to a second channel response acquired by receiving the first correction signal; acquire a first compensation coefficient according to a first channel response acquired by receiving the second correction signal; and acquire a first correction coefficient according to the first compensation coefficient and the first self-correction coefficient, acquire a second correction coefficient according to the second compensation coefficient and the second self-correction coefficient.

Example 21. The correction apparatus according to example 20, wherein, the correction apparatus further comprises a compensator, configured to perform channel compensation to the first RRU according to the first correction coefficient, and perform channel compensation to the second RRU according to the second correction coefficient.

Example 22. The correction apparatus according to example 20, wherein, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment comprises any one or any combination of following ways: digital weighting, intermediate frequency weighting, radio frequency phase shift and physical movement.

Example 23. The correction apparatus according to example 20, wherein, the correction apparatus further comprises a first transmitter, the first transmitter is configured to transmit a first transmitting self-correction coefficient of a service channel corresponding to the first antenna to the second RRU before acquiring the second compensation coefficient; and is further configured to transmit a second transmitting self-correction coefficient of a service channel corresponding to the second antenna to the first RRU before acquiring the first compensation coefficient.

Example 24. The correction apparatus according to example 20, wherein, the communication system further comprises a third RRU, the self-corrector is further configured to perform a self-correction to the third RRU comprised in the communication system, and acquire a third self-correction coefficient;

the second controller is further configured to transmit a second correction signal' to a third antenna of the third RRU through the second antenna of the second RRU, and receive the second correction signal' through the third antenna;
the correction apparatus further comprises a third controller, configured to transmit a third correction signal to the second antenna of the second RRU through the third antenna of the third RRU, and receive the third correction signal through the second antenna;
the correction apparatus further comprises a second transmitter, the second transmitter is configured to transmit the second compensation coefficient' to the first RRU;
the processor is further configured to acquire a third compensation coefficient according to a third channel response acquired by receiving the second correction signal' ; acquire a second compensation coefficient' according to a second channel response' acquired by receiving the third correction signal; acquire a first correction coefficient' according to the second compensation coefficient' and the first correction coefficient; acquire a second correction coefficient' according to the second compensation coefficient' and the second correction coefficient; acquire a third correction coefficient according to the third compensation coefficient and the third self-correction coefficient.

Example 25. The correction apparatus according to example 20, wherein, the processor is further configured to select a service channel from service channels of the first RRU or the second RRU as a reference channel, and divide correction coefficients of all service channels of the first RRU and the second RRU by correction coefficients of the reference channel respectively, so that both the first RRU and the second RRU are aligned to the reference channel.

Example 26. A correction apparatus, which is used for joint channel correction among multiple RRUs in a communication system, the communication system at least comprises a first RRU and a second RRU, wherein the correction apparatus comprises:

a self-corrector, configured to perform a self-correction to the first RRU and the second RRU respectively, and acquire first self-correction coefficients of all service channels of the first RRU and second self-correction coefficients of all service channels of the second RRU respectively; and transmit the first self-correction coefficients and the second self-correction coefficients to a processor;

a first processor, configured to select a service channel from service channels of the first RRU and the second RRU as a reference channel respectively, and divide self-correction coefficients of all service channels of the first RRU and the second RRU by self-correction coefficients of respective reference channels respectively, so that both the first RRU and the second RRU are aligned to the respective reference channels respectively; acquire updated first self-correction coefficients and updated second self-correction coefficients;

a first controller, configured to transmit a first correction signal to a second antenna corresponding to a reference channel of the second RRU through a first antenna corresponding to a reference channel of the first RRU, and receive the first correction signal through the second antenna;

a second controller, configured to transmit a second correction signal to the first antenna through the second antenna, and receive the second correction signal through the first antenna;

a transmitter, configured to transmit the first compensation coefficient to the second RRU;

a second processor, configured to acquire a second compensation coefficient according to a second channel response acquired by receiving the first correction signal; acquire a first compensation coefficient according to a first channel response acquired by receiving the second correction signal; acquire an inter-RRU compensation coefficient according to a ratio of the first compensation coefficient to the second compensation coefficient; acquire second correction coefficients of all service channels of the second RRU according to the inter-RRU compensation coefficient and the updated second self-correction coefficients of all service channels of the second RRU, and take the updated first self-correction coefficients of all service channels of the first RRU as first correction coefficients of all service channels of the first RRU.

Example 27. The correction apparatus according to example 26, wherein, the correction apparatus further comprises a compensator, configured to perform channel compensation to the first RRU according to the first correction coefficients, and perform channel compensation to the second RRU according to the second correction coefficients.

**Claims**

1. A method for joint channel correction among multiple radio remote units, RRUs, which is used for joint channel correction among multiple RRUs in a communication system, the communication system at least comprises a first RRU and a second RRU, wherein the method comprises:

performing (301, 501) a self-correction to the first RRU and acquiring a first self-correction coefficient;

transmitting (302, 502) a first correction signal to a second antenna of the second RRU through a first antenna of the first RRU, wherein the first correction signal is received by the second RRU through the second antenna; and receiving a second correction signal through the first antenna, wherein the second correction signal is transmitted to the first antenna through the second antenna;

acquiring (303, 503) a first compensation coefficient according to a first channel response acquired by receiving the second correction signal;

acquiring (304, 504) a first correction coefficient according to the first compensation coefficient and the first self-correction coefficient;

wherein the first self-correction coefficient comprises a first transmitting self-correction coefficient and a first receiving self-correction coefficient of each service channel of the first RRU, the first correction coefficient comprises a first transmitting correction coefficient and a first receiving correction coefficient of each service channel of the first RRU;

wherein the first correction signal is product of a correction reference sequence and the first transmitting self-correction coefficient of a service channel corresponding to the first antenna, the second correction signal is product of the correction reference sequence and a second transmitting self-correction coefficient of a service channel corresponding to the second antenna.

2. The method according to claim 1, further comprising: performing channel compensation to the first RRU according to the first correction coefficient.

3. The method according to claim 1 or 2, wherein, the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or performing an antenna radiation direction adjustment to antennas of the first RRU and the second RRU, selecting a pair of antennas with the best received signal strength or signal quality; or performing an antenna radiation direction adjustment to antennas of the first RRU and the second RRU, selecting a pair of antennas reaching a threshold of received signal strength or signal quality; a way of performing the antenna radiation direction adjustment comprises any one or any combination of following ways: digital weighting, intermediate frequency weighting, radio frequency phase shift and physical movement.

4. The method according to claim 1, wherein the correction reference sequence comprises a training sequence or a reference signal sequence used in a long term evolution, LTE, system.

5. A correction apparatus, which is used for joint channel correction among multiple radio remote units, RRUs, in a communication system, the communication system at least comprises a first RRU and a second RRU, wherein the correction apparatus comprises:

a self-corrector, configured to perform a self-correction to the first RRU and acquire a first self-correction coefficient; and transmit the first self-correction coefficient to a processor;
a first controller, configured to transmit a first correction signal to a second antenna of the second RRU through a first antenna of the first RRU, wherein the first correction signal is received by the second RRU through the second antenna; and receive a second correction signal through the first antenna, wherein the second correction signal is transmitted to the first antenna through the second antenna;
a processor, configured to acquire a first compensation coefficient according to a first channel response acquired by receiving the second correction signal; and acquire a first correction coefficient according to the first compensation coefficient and the first self-correction coefficient;
wherein, the first self-correction coefficient comprises a first transmitting self-correction coefficient and a first receiving self-correction coefficient of each service channel of the first RRU, the first correction coefficient comprises a first transmitting correction coefficient and a first receiving correction coefficient of each service channel of the first RRU;
wherein the first correction signal is product of a correction reference sequence and the first transmitting self-correction coefficient of a service channel corresponding to the first antenna, the second correction signal is product of the correction reference sequence and a second transmitting self-correction coefficient of a service channel corresponding to the second antenna.

6. The correction apparatus according to claim 5, wherein the correction apparatus further comprises a compensator, configured to perform channel compensation to the first RRU according to the first correction coefficient.

7. The correction apparatus according to claim 5 or 6, wherein the first antenna and the second antenna are any antenna of the first RRU and the second RRU respectively; or the first antenna and the second antenna are an antenna with the best received signal strength or signal quality of the first RRU and the second RRU respectively; or the first antenna and the second antenna are an antenna reaching a threshold of received signal strength or signal quality of the first RRU and the second RRU respectively; or perform an antenna radiation direction adjustment to antennas of the first RRU and the second RRU, select a pair of antennas with the best received signal strength or signal quality; or perform an antenna radiation direction adjustment to antennas of the first RRU and the second RRU, select a pair of antennas reaching a threshold of received signal strength or signal quality; a way of performing the antenna radiation direction adjustment comprises any one or any combination of following ways: digital weighting, intermediate frequency weighting, radio frequency phase shift and physical movement.

8. The correction apparatus according to claim 5, wherein the correction reference sequence comprises a training sequence or a reference signal sequence used in a long term evolution, LTE, system.

**Patentansprüche**

1.  Verfahren für eine verbundene Kanalkorrektur zwischen mehreren Funkempfängern, RRUs (Radio Remote Units), das für eine verbundene Kanalkorrektur zwischen mehreren RRUs in einem Kommunikationssystem verwendet wird, wobei das Kommunikationssystem mindestens einen ersten RRU und einen zweiten RRU umfasst, wobei das Verfahren umfasst:

    Durchführen (301, 501) einer Selbstkorrektur an dem ersten RRU und Erhalten eines ersten Selbstkorrekturkoeffizienten;
    Senden (302, 502) eines ersten Korrektursignals an eine zweite Antenne des zweiten RRU über eine erste Antenne des ersten RRU, wobei das erste Korrektursignal durch den zweiten RRU über die zweite Antenne empfangen wird; und Empfangen eines zweiten Korrektursignals über die erste Antenne, wobei das zweite Korrektursignal über die zweite Antenne an die erste Antenne gesendet wird;
    Erhalten (303, 503) eines ersten Kompensationskoeffizienten gemäß einer ersten Kanalantwort, die durch Empfangen des zweiten Korrektursignals erhalten wurde;
    Erhalten (304, 504) eines ersten Korrekturkoeffizienten gemäß dem ersten Kompensationskoeffizienten und dem ersten Selbstkorrekturkoeffizienten;
    wobei der erste Selbstkorrekturkoeffizient einen ersten Sende-Selbstkorrekturkoeffizienten und einen ersten Empfangs-Selbstkorrekturkoeffizienten jedes Dienstkanals des ersten RRU umfasst, wobei der erste Korrekturkoeffizient einen ersten Sende-Korrekturkoeffizienten und einen ersten Empfangs-Korrekturkoeffizienten jedes Dienstkanals des ersten RRU umfasst;
    wobei das erste Korrektursignal ein Produkt einer Korrekturreferenzsequenz und des ersten Sende-Selbstkorrekturkoeffizienten eines Dienstkanals, der der ersten Antenne entspricht, ist, wobei das zweite Korrektursignal ein Produkt der Korrekturreferenzsequenz und einem zweiten Sende-Selbstkorrekturkoeffizienten eines Dienstkanals, der der zweiten Antenne entspricht, ist.

2.  Verfahren nach Anspruch 1, ferner umfassend: Durchführen einer Kanalkompensation an dem ersten RRU gemäß dem ersten Korrekturkoeffizienten.

3.  Verfahren nach Anspruch 1 oder 2, wobei die erste Antenne und die zweite Antenne eine beliebige Antenne des ersten RRU bzw. des zweiten RRU sind; oder die erste Antenne und die zweite Antenne eine Antenne mit der besten Empfangssignalstärke oder Signalqualität des ersten RRU bzw. des zweiten RRU sind; oder die erste Antenne und die zweite Antenne eine Antenne sind, die einen Schwellwert einer Empfangssignalstärke oder Signalqualität des ersten RRU bzw. des zweiten RRU erreicht; oder Durchführen einer Antennenstrahlungsrichtungseinstellung an Antennen des ersten RRU und des zweiten RRU, Auswählen eines Paars von Antennen mit der besten Empfangssignalstärke oder Signalqualität; oder Durchführen einer Antennenstrahlungsrichtungseinstellung an Antennen des ersten RRU und des zweiten RRU, Auswählen eines Paars von Antennen, die einen Schwellwert einer Empfangssignalstärke oder Signalqualität erreichen; wobei eine Art des Durchführens der Antennenstrahlungsrichtungseinstellung eine beliebig oder eine beliebige Kombination folgender Arten umfasst: digitale Gewichtung, Zwischenfrequenzgewichtung, Funkfrequenzphasenverschiebung und physische Bewegung.

4.  Verfahren nach Anspruch 1, wobei die Korrekturreferenzsequenz eine Trainingssequenz oder eine Referenzsignalsequenz umfasst, die in einem Long Term Evolution(LTE)-System verwendet wird.

5.  Korrektureinrichtung, die für eine verbundene Kanalkorrektur zwischen mehreren Funkempfängern, RRUs, in einem Kommunikationssystem verwendet wird, wobei das Kommunikationssystem mindestens einen ersten RRU und einen zweiten RRU umfasst, wobei die Korrektureinrichtung umfasst:

    eine Selbstkorrekturvorrichtung, die ausgelegt ist, eine Selbstkorrektur an dem ersten RRU durchzuführen und einen ersten Selbstkorrekturkoeffizienten zu erhalten; und den ersten Selbstkorrekturkoeffizienten an einen Prozessor zu senden;
    eine erste Steuerung, die ausgelegt ist, ein erstes Korrektursignal an eine zweite Antenne des zweiten RRU über eine erste Antenne des ersten RRU zu senden, wobei das erste Korrektursignal durch den zweiten RRU über die zweite Antenne empfangen wird; und ein zweites Korrektursignal über die erste Antenne zu empfangen, wobei das zweite Korrektursignal über die zweite Antenne an die erste Antenne gesendet wird;

einen Prozessor, der ausgelegt ist, einen ersten Kompensationskoeffizienten gemäß einer ersten Kanalantwort zu erhalten, die durch Empfangen des zweiten Korrektursignals erhalten wird; und einen ersten Korrekturkoeffizienten gemäß dem ersten Kompensationskoeffizienten und dem ersten Selbstkorrekturkoeffizienten zu erhalten;

wobei der erste Selbstkorrekturkoeffizient einen ersten Sende-Selbstkorrekturkoeffizienten und einen ersten Empfangs-Selbstkorrekturkoeffizienten jedes Dienstkanals des ersten RRU umfasst, wobei der erste Korrekturkoeffizient einen ersten Sende-Korrekturkoeffizienten und einen ersten Empfangs-Korrekturkoeffizienten jedes Dienstkanals des ersten RRU umfasst;

wobei das erste Korrektursignal ein Produkt einer Korrekturreferenzsequenz und des ersten Sende-Selbstkorrekturkoeffizienten eines Dienstkanals, der der ersten Antenne entspricht, ist, wobei das zweite Korrektursignal ein Produkt der Korrekturreferenzsequenz und einem zweiten Sende-Selbstkorrekturkoeffizienten eines Dienstkanals, der zweiten Antenne entspricht, ist.

6. Korrektureinrichtung nach Anspruch 5, wobei die Korrektureinrichtung ferner eine Kompensationsvorrichtung umfasst, die ausgelegt ist, eine Kanalkompensation an dem ersten RRU gemäß dem ersten Korrekturkoeffizienten durchzuführen.

7. Korrektureinrichtung nach Anspruch 5 oder 6, wobei die erste Antenne und die zweite Antenne eine beliebige Antenne des ersten RRU bzw. des zweiten RRU sind; oder die erste Antenne und die zweite Antenne eine Antenne mit der besten Empfangssignalstärke oder Signalqualität des ersten RRU bzw. des zweiten RRU sind; oder die erste Antenne und die zweite Antenne eine Antenne sind, die einen Schwellwert einer Empfangssignalstärke oder Signalqualität des ersten RRU bzw. des zweiten RRU erreicht; oder Durchführen einer Antennenstrahlungsrichtungseinstellung an Antennen des ersten RRU und des zweiten RRU, Auswählen eines Paars von Antennen mit der besten Empfangssignalstärke oder Signalqualität; oder Durchführen einer Antennenstrahlungsrichtungseinstellung an Antennen des ersten RRU und des zweiten RRU, Auswählen eines Paars von Antennen, die einen Schwellwert einer Empfangssignalstärke oder Signalqualität erreichen; wobei eine Art des Durchführens der Antennenstrahlungsrichtungseinstellung eine beliebig oder eine beliebige Kombination folgender Arten umfasst: digitale Gewichtung, Zwischenfrequenzgewichtung, Funkfrequenzphasenverschiebung und physische Bewegung.

8. Korrektureinrichtung nach Anspruch 5, wobei die Korrekturreferenzsequenz eine Trainingssequenz oder eine Referenzsignalsequenz umfasst, die in einem Long Term Evolution(LTE)-System verwendet wird.

## Revendications

1. Procédé de correction de canal conjointe parmi de multiples unités radio distantes, notées RRU, utilisé pour une correction de canal conjointe parmi de multiples RRU dans un système de communication, le système de communication comprenant au moins une première RRU et une deuxième RRU, le procédé comprenant :

l'application (301, 501) d'une autocorrection sur la première RRU et l'acquisition d'un premier coefficient d'autocorrection ;

l'émission (302, 502) d'un premier signal de correction à destination d'une deuxième antenne de la deuxième RRU au moyen d'une première antenne de la première RRU, le premier signal de correction étant reçu par la deuxième RRU au moyen de la deuxième antenne ; et la réception d'un deuxième signal de correction au moyen de la première antenne, le deuxième signal de correction étant émis à destination de la première antenne au moyen de la deuxième antenne ;

l'acquisition (303, 503) d'un premier coefficient de compensation selon une première réponse de canal acquise par la réception du deuxième signal de correction ;

l'acquisition (304, 504) d'un premier coefficient de correction selon le premier coefficient de compensation et le premier coefficient d'autocorrection ;

le premier coefficient d'autocorrection comprenant un premier coefficient d'autocorrection en émission et un premier coefficient d'autocorrection en réception de chaque canal de service de la première RRU, le premier coefficient de correction comprenant un premier coefficient de correction en émission et un premier coefficient de correction en réception de chaque canal de service de la première RRU;

le premier signal de correction consistant en le produit d'une séquence de référence de correction et du premier coefficient d'autocorrection en émission d'un canal de service correspondant à la première antenne, le deuxième signal de correction consistant en le produit de la séquence de référence de correction et d'un deuxième coefficient d'autocorrection en émission d'un canal de service correspondant à la deuxième antenne.

**2.** Procédé selon la revendication 1, comprenant en outre : l'application d'une compensation de canal sur la première RRU selon le premier coefficient de correction.

**3.** Procédé selon la revendication 1 ou 2, dans lequel la première antenne et la deuxième antenne consistent en une antenne quelconque de la première RRU et de la deuxième RRU, respectivement ; ou la première antenne et la deuxième antenne consistent en une antenne offrant la meilleure intensité de signal reçu ou la meilleure qualité de signal reçu de la première RRU et de la deuxième RRU, respectivement ; ou la première antenne et la deuxième antenne consistent en une antenne atteignant un seuil d'intensité de signal reçu ou de qualité de signal reçu de la première RRU et de la deuxième RRU, respectivement ; ou l'application d'un réglage de direction de rayonnement d'antenne sur des antennes de la première RRU et de la deuxième RRU, la sélection d'une paire d'antennes offrant la meilleure intensité de signal reçu ou la meilleure qualité de signal reçu ; ou l'application d'un réglage de direction de rayonnement d'antenne sur des antennes de la première RRU et de la deuxième RRU, la sélection d'une paire d'antennes atteignant un seuil d'intensité de signal reçu ou de qualité de signal reçu ; un mode d'application du réglage de direction de rayonnement d'antenne comprend l'un quelconque ou une combinaison quelconque des modes suivants : une pondération numérique, une pondération de fréquence intermédiaire, un déphasage radiofréquence et un déplacement physique.

**4.** Procédé selon la revendication 1, dans lequel la séquence de référence de correction comprend une séquence d'apprentissage ou une séquence de signaux de référence utilisée dans un système d'évolution à long terme, notée LTE.

**5.** Appareil de correction, utilisé pour une correction de canal conjointe parmi de multiples unités radio distantes, notées RRU, dans un système de communication, le système de communication comprenant au moins une première RRU et une deuxième RRU, l'appareil de correction comprenant :

un autocorrecteur, configuré pour appliquer une autocorrection sur la première RRU et acquérir un premier coefficient d'autocorrection ; et transmettre le premier coefficient d'autocorrection à un processeur ;
un premier contrôleur, configuré pour émettre un premier signal de correction à destination d'une deuxième antenne de la deuxième RRU au moyen d'une première antenne de la première RRU, le premier signal de correction étant reçu par la deuxième RRU au moyen de la deuxième antenne ; et recevoir un deuxième signal de correction au moyen de la première antenne, le deuxième signal de correction étant émis à destination de la première antenne au moyen de la deuxième antenne ;
un processeur, configuré pour acquérir un premier coefficient de compensation selon une première réponse de canal acquise par la réception du deuxième signal de correction ; et acquérir un premier coefficient de correction selon le premier coefficient de compensation et le premier coefficient d'autocorrection ;
le premier coefficient d'autocorrection comprenant un premier coefficient d'autocorrection en émission et un premier coefficient d'autocorrection en réception de chaque canal de service de la première RRU, le premier coefficient de correction comprenant un premier coefficient de correction en émission et un premier coefficient de correction en réception de chaque canal de service de la première RRU;
le premier signal de correction consistant en le produit d'une séquence de référence de correction et du premier coefficient d'autocorrection en émission d'un canal de service correspondant à la première antenne, le deuxième signal de correction consistant en le produit de la séquence de référence de correction et d'un deuxième coefficient d'autocorrection en émission d'un canal de service correspondant à la deuxième antenne.

**6.** Appareil de correction selon la revendication 5, lequel appareil de correction comprend en outre un compensateur, configuré pour appliquer une compensation de canal sur la première RRU selon le premier coefficient de correction.

**7.** Appareil de correction selon la revendication 5 ou 6, dans lequel la première antenne et la deuxième antenne consistent en une antenne quelconque de la première RRU et de la deuxième RRU, respectivement ; ou la première antenne et la deuxième antenne consistent en une antenne offrant la meilleure intensité de signal reçu ou la meilleure qualité de signal reçu de la première RRU et de la deuxième RRU, respectivement ; ou la première antenne et la deuxième antenne consistent en une antenne atteignant un seuil d'intensité de signal reçu ou de qualité de signal reçu de la première RRU et de la deuxième RRU, respectivement ; ou appliquer un réglage de direction de rayonnement d'antenne sur des antennes de la première RRU et de la deuxième RRU, sélectionner une paire d'antennes offrant la meilleure intensité de signal reçu ou la meilleure qualité de signal reçu ; ou appliquer un réglage de direction de rayonnement d'antenne sur des antennes de la première RRU et de la deuxième RRU, sélectionner une paire d'antennes atteignant un seuil d'intensité de signal reçu ou de qualité de signal reçu ; un mode d'application du réglage de direction de rayonnement d'antenne comprend l'un quelconque ou une combinaison quelconque des modes suivants : une pondération numérique, une pondération de fréquence intermédiaire, un déphasage radiofréquence et un déplacement physique.

8. Appareil de correction selon la revendication 5, dans lequel la séquence de référence de correction comprend une séquence d'apprentissage ou une séquence de signaux de référence utilisée dans un système d'évolution à long terme, notée LTE.

FIG. 1

RRU0

service transmitting channel $h_{0,0}^{t}$

service receiving channel $h_{0,0}^{r}$

transmitting and receiving switchover

antenna 0

service channel 0

service transmitting channel $h_{0,N_{ANT}-1}^{t}$

service receiving channel $h_{0,N_{ANT}-1}^{r}$

transmitting and receiving switchover

antenna $N_{ANT}-1$

service channel $N_{ANT}-1$

correction transmitting channel $h_{0}^{ct}$

correction receiving channel $h_{0}^{cr}$

transmitting and receiving switchover

correction coupling circuit

correction channel

service transmitting channel $h_{1,0}^{t}$

service receiving channel $h_{1,0}^{r}$

transmitting and receiving switchover

antenna 0

service channel 0

service transmitting channel $h_{1,N_{ANT}-1}^{t}$

service receiving channel $h_{1,N_{ANT}-1}^{r}$

transmitting and receiving switchover

antenna $N_{ANT}-1$

service channel $N_{ANT}-1$

correction transmitting channel $h_{1}^{ct}$

correction receiving channel $h_{0}^{cr}$

transmitting and receiving switchover

correction coupling circuit

correction channel

RRU1

FIG. 2

performing a self-correction to an RRU0 and an RRU1 respectively, acquiring a first self-correction coefficient and a second self-correction coefficient respectively; ⌐301

↓

transmitting a first correction signal to a second antenna of the RRU1 through a first antenna of the RRU0, receiving the first correction signal through the second antenna, acquiring a second compensation coefficient ⌐302

↓

transmitting a second correction signal to the first antenna through the second antenna, receiving the second correction signal through the first antenna, and acquiring a first compensation coefficient ⌐303

↓

acquiring a first correction coefficient of the RRU0 according to the first compensation coefficient and the first self-correction coefficient, acquiring a second correction coefficient of the RRU1 according to the second compensation coefficient and the second self-correction coefficient ⌐304

FIG. 3

RRU0

RRU0

RRU1

FIG. 4

performing a self-correction to an RRU0 and an RRU1 respectively, acquiring a first self-correction coefficient and a second self-correction coefficient respectively;  — 501

transmitting a first correction signal to a second antenna of the RRU1 through a first antenna of the RRU0, receiving the first correction signal through the second antenna, acquiring a second compensation coefficient  — 502

transmitting a second correction signal to the first antenna through the second antenna, receiving the second correction signal through the first antenna, and acquiring a first compensation coefficient  — 503

acquiring a first correction coefficient of the RRU0 according to the first compensation coefficient and the first self-correction coefficient, acquiring a second correction coefficient of the RRU1 according to the second compensation coefficient and the second self-correction coefficient  — 504

FIG. 5

FIG. 6

performing a self-correction to an RRU0, an RRU1 and an RRU2 respectively, acquiring a first self-correction coefficient, a second self-correction coefficient and a third self-correction coefficient respectively — 701

performing a joint channel correction to the RRU0 and the RRU1 — 702

transmitting a first correction signal' to a third antenna in the RRU2 through a second antenna in the RRU1, receiving the first correction signal' through the third antenna, acquiring a third compensation coefficient — 703

transmitting a third correction signal to the second antenna in the RRU1 through the third antenna in the RRU2, receiving the first correction signal through the second antenna, acquiring a second compensation coefficient' — 704

acquiring a second correction coefficient'according to the second compensation coefficient'and the second self-correction coefficient, acquiring a third correction coefficient according to the third compensation coefficient and the third self-correction coefficient, transmitting, by the RRU1, the second compensation coefficient' to the RRU0, and acquiring a first correction coefficient' according to the second compensation coefficient' and the first self-correction coefficient — 705

FIG. 7

FIG. 8

performing a self-correction to an RRU0, an RRU1...an RRUk respectively, acquiring a first self-correction coefficient, a second self-correction coefficient and a third self-correction coefficient respectively;  ⟋ 901

↓

performing a joint channel correction to the RRU0 and the RRU1  ⟋ 902

↓

performing a joint channel correction to the RRU0, the RRU1 and the RRU2  ⟋ 903

↓

performing a joint channel correction to the RRU0, the RRU1, the RRU2 and the RRU3  ⟋ 904

↓

performing a joint channel correction to the RRU0, the RRU1... the RRUk  ⟋ 905

FIG. 9

performing a self-correction to an RRU0, an RRU1 and an RRU2 respectively, acquiring a first self-correction coefficient, a second self-correction coefficient and a third self-correction coefficient respectively ⟋1001

↓

performing a joint channel correction to the RRU0 and the RRU1 ⟋1002

↓

performing a joint channel correction to the RRU0 and the RRU2 ⟋1003

↓

performing a joint channel correction to the RRU1 and the RRU2 ⟋1004

↓

transmitting, by the RRU1, the second compensation coefficient' to the RRU0 ⟋1005

FIG. 10

| self-corrector | first controller | second controller | processor |

| compensator | second transmitter | first transmitter |

FIG. 11

performing a self-correction to an RRU0 and an RRU1 respectively;

1201

performing a relative self-correction to the RRU0 and the RRU1 respectively

1202

transmitting a correction signal through an antenna p of the RRU0 and an antenna q of the RRU2 to each other

1203

acquiring a compensation coefficient according to a channel response acquired by receiving the correction signal

1204

acquiring an inter-RRU compensation coefficient, and acquiring a correction coefficient according to the inter-RRU compensation coefficient

1205

FIG. 12

| self-corrector | first processor | first controller | second controller |

| compensator | second processor | transmitter |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120208584 A1
- US 20120252366 A1